# EUROPEAN PATENT SPECIFICATION

(11) **EP 4 178 729 B1**
(45) Date of publication and mention of the grant of the patent: **03.12.2025**
(21) Application number: 21838605.0
(22) Date of filing: 09.07.2021
(51) Int. Cl.: A23B 7/16, A23B 9/14, A23P 10/30, A23P 20/00, A23P 20/10, B05B 13/02, C05G 5/30, B05D 3/04

(54) **COATED SUBSTRATES AND METHOD OF MAKING SAME**
BESCHICHTETE SUBSTRATE UND VERFAHREN ZU IHRER HERSTELLUNG
SUBSTRATS REVÊTUS ET LEUR PROCÉDÉ DE FABRICATION

(30) Priority: 10.07.2020 US 202063050344 P; 07.08.2020 US 202063062491 P; 23.11.2020 US 202063116940 P
(43) Date of publication of application: 17.05.2023
(73) Proprietor: CoteX Technologies Inc., Dartmouth, Nova Scotia, B3B 1L4 (CA)
(72) Inventor: YADAV, Santosh Kumar, Sydney, Nova Scotia B1P 6L2 (CA)
(74) Representative: LLR
(86) International application number: PCT/CA2021/050944
(87) International publication number: WO 2022/006678

(56) References cited:
- EP-A1- 0 611 032
- WO-A1-02/098394
- WO-A1-2005/030116
- WO-A1-2014/031501
- WO-A1-2016/172039
- WO-A1-2020/092163
- BE-A1- 1 023 224
- BE-B1- 1 023 224
- US-A1- 2004 161 527
- US-A1- 2004 161 527
- US-A1- 2008 131 543
- US-A1- 2008 131 543
- US-A1- 2015 218 059
- US-A1- 2015 218 059
- US-A1- 2019 233 345

## Description

### TECHNICAL FIELD

The disclosure relates generally to coating a substrate, and more particularly to an improved coated substrate, and systems and methods for manufacturing the coated substrate.

### BACKGROUND

Substrates may be coated to provide resistance to environmental factors, e.g. to water contamination, or provide desired performance characteristics, such as delayed release, which may be required based for certain types of substrate. Coated substrates may be used in fertilizer, pharmaceutical tablets, and other applications. Components forming a substrate may be sensitive to environmental influences and could be degraded and become less effective or cause undesirable effects if exposed to the surrounding environment before the substrate intended use. Coating a substrate may prevent undesirable effects due to environmental contamination or degradation. Coated substrates may also be designed for timed release where the coating is design to expose the substrate under certain desirable conditions.

Document WO 2014/021501 A1 discloses a method for coating a plurality of articles.

### SUMMARY

In one aspect, the disclosure describes a method of manufacturing a coated substrate, the method comprising: securing a substrate to a pedestal; applying a first coating layer onto the substrate; wrapping the first coating layer around the substrate to substantially coat the substrate, the first coating layer having excess coating of the first coating layer extending away from the substantially coated substrate and around the pedestal; withdrawing the pedestal from the substrate; forming a tail from the excess coating of the first coating layer, the tail extending at an angle from the surface of the substrate; and sealing the tail to the first coating layer to encapsulate the substrate.

In an embodiment, the substrate is a solid core.

In an embodiment, the pedestal is a pin. In an embodiment, the method comprises heating the pin. The pin may be heated to a temperature greater than the melting point of the substrate; and securing the substrate to the pin comprises contacting the pin and substrate to embed a portion of the pin into the substrate.

In an embodiment, before securing the substrate to the pedestal, a second coating layer is applied onto the pedestal to partially coat the pedestal; and delivering the substrate to the partially coated pedestal. The second coating layer may be heated to thermoform the second coating layer around the pedestal. In an embodiment, the tail is formed from the excess coating of the first coating layer and a portion of the second coating layer.

In an embodiment, the pedestal comprises a channel configured to provide vacuum suction to secure the substrate to the pedestal.

In an embodiment, the solid core is fed into a cavity.

In an embodiment, the pedestal is extended into the cavity to couple with the substrate, where the pedestal translates along its longitudinal axis without horizontal displacement.

In an embodiment, the edges of the first coating layer are applied onto a lateral surface at the periphery the cavity; and breaking the edges of the first coating layer off the lateral portions of the cavity.

In an embodiment, the first coating layer is wrapped around the substrate comprises suction pulling the first coating layer around the substrate.

In an embodiment, the first coating layer is wrapped around the substrate comprises blowing air along a periphery of the first coating layer.

In an embodiment, the tail is melted and laminated to the first coating layer.

In an embodiment, the substrate is a fertilizer, a pesticide, a fertilizer-pesticide combination product, a pharmaceutical tablet, a nutraceutical tablet, an agriculture seed, a solid food article, or a water soluble solid core.

Embodiments may include combinations of the above features.

In another aspect, the disclosure describes a coated substrate comprising: a substrate; a coating layer encapsulating the substrate, the coating layer comprising a primary portion covering a substantial surface area of the substrate; and a sealing area covering a reminder of the surface area of the substrate, the primary portion comprising a single unitary piece of polymer film having edges sealed at the sealing area.

In an embodiment, the substrate is solid core. In another embodiment, the substrate is a fertilizer, a pesticide, a fertilizer-pesticide combination product, a pharmaceutical tablet, a nutraceutical tablet, an agriculture seed, a solid food article, or a water soluble solid core.

In an embodiment, the sealing area comprises excess film of the single piece of polymer film laminated to at least one of the substrate or polymer film forming the coating layer.

In an embodiment, the coating layer comprises at least one of a polymer, a polymer processing additive, a mineral, a pigment, a pesticide, a antimicrobial agent, a anti ripening agent, a plant growth agent, a micro-nutrient, a pharmaceutically active ingredient, a poly(vinyl alcohol), a wax, a tackifying resin, a tackifier, fungicide, insecticide, nematicide, herbicide, microorganism and/or a fertilizer .

In an embodiment, the coating layer is at least one of a thermoformable film, vacuum formable film, biodegradable film, non-biodegradable film, water-soluble film, non-enteric film, and/or polymer film comprising at least one plant growth agent.

In an embodiment, the coating layer is about 0.1% to 30% of the total weight of the substrate, preferably between 0.1% to 10% of the total weight of the substrate, more preferably between 0.1% to 5% of the total weight of the substrate.

In an embodiment, the sealing area has a thickness greater than the primary portion.

In an embodiment, the sealing area is less than 40% of the total surface are of the coated substrate, preferably less than 20% of the total surface of the coated substrate, more preferably less than 10% of the total surface of the coated substrate..

In an embodiment, the sealing area has a thickness substantially the same as the primary portion of the coating layer.

In an embodiment, the sealing area is formed by coupling an excess tubular portion of the coating layer to an adjacent portion of the coating layer layered onto the substrate, the tubular portion comprising the edges of the coating layer.

In an embodiment, the sealing area is formed by melting the excess tubular portion and laminating the melted excess tubular portion to the coating layer.

In an embodiment, the sealing area comprises a reinforcing coating layer coupled to the edges of the coating layer.

In an embodiment, a supplemental coating layer is applied onto the first coating layer, or directly onto the solid core, the second coating layer at least partially encapsulating the solid core.

Embodiments may include combinations of the above features.

In a further aspect, the disclosure describes a system for manufacturing a coated substrate, the system comprising: a feed device configured to feed a substrate into a receptacle, the receptacle having a counterpart pedestal; a first coating apparatus configured to apply a coating layer to the receptacle; and a biasing device configured to bias the coating layer around the substrate and a portion of the pedestal; the pedestal being movable relative to its counterpart receptacle through an opening defined in the counterpart receptacle, the pedestal configured to transition between an extended position in which the pedestal is extended into its counterpart receptacle for receiving the substrate on the pedestal and a withdrawn position in which the pedestal is withdrawn from its counterpart receptacle disengaging the pedestal from the substrate and coating layer to form a coated substrate having a tail; and a sealing system to seal the tail to the coating layer.

In an embodiment, a second coating apparatus configured to apply a second coating layer onto each pedestal to partially coat the pedestal before the pedestal receives the substrate.

In an embodiment, each pedestal is configured to translate along its longitudinal axis through the opening the counterpart receptacle without horizontal displacement to engage the substrate or disengage from the substrate.

In an embodiment, the receptacle is cavity defined with a surface of a plate.

In an embodiment, the pedestal defines a channel configured to provide vacuum suction to secure the substrate to the pedestal.

In an embodiment, the biasing device is a vacuum pump configured to create vacuum pressure at the opening to bias the coating layer around the substrate and the portion of the pedestal.

In an embodiment, the biasing device is an air pump configured to pressure air to bias the coating layer around the substrate and the portion of the pedestal.

Embodiments may include combinations of the above features.

In a further aspect, the disclosure describes a system for manufacturing a coated substrate, the system comprising: a first rotating drum comprising a plurality of receptacles positioned on surface of the first rotating drum; a feed device configured to feed a plurality of substrate to the first rotating drum, each, substrate feed into one of the plurality of receptacles, each receptacle having a counterpart pedestal; a first coating apparatus configured to apply a coating layer to each of the plurality of receptacles containing the substrate, the coating layer applied as each of the plurality of receptacles rotate past the first coating apparatus; and a biasing device configured to bias the coating layer around the substrate and a portion of the pedestal; wherein the counterpart pedestal of each of the plurality of receptacles is movable relative to its counterpart receptacle through an opening defined in the counterpart receptacle, the pedestal movable to transition between an extended position in which the pedestal is extended into its counterpart receptacle to receive the substrate on the pedestal and a withdrawn position in which the pedestal is withdrawn from its counterpart receptacle disengaging the pedestal from the substrate and coating layer to form a coated substrate having a tail; and a sealing system to seal the tail to the coating layer.

In an embodiment, each pedestal is configured to translate along its longitudinal axis through the opening the counterpart receptacle without horizontal displacement to engage the substrate or disengage from the substrate.

In an embodiment, the system comprises a second rotary drum having a plurality of receptacles on a surface of the second rotary drum, the plurality of receptacles of the second rotary drum positioned to receive the coated substrate having the tail from the first rotary drum, the coated substrate positioned on the second rotary drum having the tail positioned away from the second rotary drum.

In an embodiment, the system comprises a roller to laminate the tail to the coating layer.

In an embodiment, the biasing device comprises a vacuum box configured to provide vacuum pressure to each receptacle as it rotates from the feed device to before a position adjacent to the second rotary drum.

In an embodiment, each pedestal defines a channel communicating the vacuum box to the pedestal.

In an embodiment, the biasing device comprises a air pump configured to blow air to bias the coating layer around the substrate and a portion of the pedestal.

In an embodiment, the sealing system comprises a heat source to heat melt the tail to the coating layer.

In an embodiment, the system comprises a heated pin system for heating the pedestal, the heated pin system comprising a heating element to heat the pedestal to a desired temperature, wherein the pedestal is a pin having a tip for contacting the substrate to adhere the pin to the substrate by spot melting when the pin is in the extended position.

Embodiments may include combinations of the above features.

In a further aspect, the disclosure describes a system for manufacturing a coated substrate, the system comprising: a platform plate comprising one or more pedestals, each pedestal having a counterpart receptacle on a cavity plate, the cavity plate comprising one or more receptacles positioned on surface of the cavity plate, each receptacle defining a cavity for receiving a substrate, and each receptacle defining an opening extending through the cavity plate; a feed device configured to feed a substrate to each pedestal or its counterpart receptacle; a first coating apparatus configured to apply a first coating layer to each of the plurality of receptacles containing the substrate; a first biasing device configured to bias the first coating layer around the substrate and a portion of each pedestal, the platform plate moveable relative to the cavity plate to simultaneously move each pedestal relative to its counterpart receptacle through an opening defined in the counterpart receptacle, the pedestal movable to transition between an extended position in which the pedestal is extended into its counterpart receptacle to receive the substrate on the pedestal and a withdrawn position in which the pedestal is withdrawn from its counterpart receptacle disengaging the pedestal from the substrate and first coating layer to form a coated substrate having a tail; and a sealing system to seal the tail to the first coating layer.

In an embodiment, the system comprises a first biasing member configured to bias the platform plate away from the cavity plate to move the one or more pedestals to the withdrawn position.

In an embodiment, the biasing member is a spring positioned between the cavity plate and platform plate.

In an embodiment, the system comprises a second coating apparatus positioned to apply a second coating layer to the receptacle before the substrate is fed to the receptacle by the feed device.

In an embodiment, the system comprises a second biasing device positioned to bias the second coating layer around the portion of each pedestal before the substrate is fed to the receptacle by the feed device.

In an embodiment, the system comprises one or more disengagement members secured to each receptacle and extending into the cavity for receiving the substrate.

In an embodiment, the pedestal comprising a plurality of members forming a platform to receive the substrate, the plurality of members positioned on the platform plate to move between the disengagement members when the pedestal moves between the extended and withdrawn positions.

In an embodiment, the plurality of members comprising three members positioned at three vertices of a triangle.

In an embodiment, the plurality of members comprising four members at four vertices of a cross.

In an embodiment, the platform plate defines a plurality of vacuum openings each generally positioned in a center the plurality of members, each opening configured to communicate vacuum pressure from a vacuum pressure source to the counterpart receptacle when the plurality of vacuum openings are aligned with the counterpart openings in the cavity plate.

In an embodiment, each pedestal is configured to translate along its longitudinal axis through the opening its counterpart receptacle without horizontal displacement to engage the substrate or disengage from the substrate.

In an embodiment, the biasing device comprises a air pump configured to blow air to bias the coating layer around the substrate and a portion of the pedestal.

In an embodiment, the system comprises an actuator coupled to at least one of the cavity plate and platform plate to move the cavity plate relative to the platform plate to simultaneously move each pedestal between the extended position and withdrawn position.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 shows a side view of an example coated substrate;
FIG. 2A shows side view of a precursor to the coated substrate shown in FIG. 1; and
FIG. 2B shows a fragmentary view of an example tail of coated substrate shown in FIG. 2A.
FIG. 3 shows a receptacle of an example system for manufacturing a coated substrate.
FIG. 4 shown an example pedestal of an example system for manufacturing a coated substrate.
FIG. 5 shown a example system comprising the receptacle of FIG. 3 and pedestal of FIG. 4 in its withdrawn position. A substrate is receive in the receptacle.
FIG. 6 shows a substrate positioned on the pedestal of FIG. 4 in the pedestal's extended position.
FIG. 7 shows a coating layer being applied to the substrate and receptacle of FIG. 6
FIG. 8 shows the application of vacuum pressure or air pressure to coating layer of FIG. 7.
FIG. 9 shows an example precursor to a coated substrate and the pedestal of the example system shown in FIG. 8 in its withdrawn position.
FIG. 10 shows the example precursor of FIG. 9 repositioned in another receptacle.
FIG. 11 shows the example precursor of FIG. 10 and a heating device for heating a tail of the example precursor.
FIG. 12 shows a roller for laminating the tail shown in FIG. 11 and a resulting example coated substrate.
FIG. 13 shows a plurality of example pedestals of a system for manufacturing coated substrate.
FIG. 14 shows an example system for manufacturing coated substrate comprising the pedestals of FIG. 13.
FIG. 15 shows an example apparatus comprising the system of FIG. 3-12 for manufacturing a coated substrate.
FIG. 16 shows another example apparatus comprising the system of FIG. 3-12 for manufacturing a coated substrate.
FIG. 17 shows an example coatingapparatus.
FIGs. 18-23 shows an another system for manufacturing a coated substrate. FIG. 18 and 19 shows in example receptacle and pedestal of the system. FIG. 20 shows a substrate received on the pedestal shown in FIGs. 18 and 19. FIGs. 21-23 show a coating layer being applied to the substrate of FIG. 20 to form an example precursor.
FIG. 24 shows an example apparatus comprising the system of FIG. 18-23.
FIG. 25 shows an example apparatus comprising a system for manufacturing a coated substrate.
FIG. 26 shows an example platform plate of the system of FIG. 25.
FIG. 27 shows an example cavity plate of the system of FIG. 25.
FIG. 28 shows a cross-sectional view of the example platform plate of FIG. 26.
FIG. 29 shows a cross-sectional view of example cavity plate of FIG. 27.
FIG. 30 shows a cross-sectional view of the example cavity plate of FIG. 27 positioned on the example platform plate.
FIG. 31 shows a cross-sectional view of example cavity plate positioned on platform plate shown in FIG. 30 being coated by a coating layer.
FIG. 32 shows a cross-sectional view of the example cavity plate positioned on the platform plate shown in FIG. 30 after it is partially coated by a coating layer.
FIG. 33 shows a cross-sectional view of example cavity plate positioned on platform plate shown in FIG. 30 after it is partially coated by a coating layer and has received a substrate.
FIG. 34 shows a cross-sectional view of the example cavity plate positioned on platform plate shown in FIG. 30 having an example precursor positioned on a pedestal of the platform plate.
FIG. 35 shows the example precursor of FIG. 34.
FIG. 36 shows an example coated substrate formed from the precursor of FIG. 35.
FIG. 37 shows an isometric view of an example cavity plate of a system for manufacturing a coated substrate.
FIG. 38 shows an isometric view of an example platform plate of a system for manufacturing a coated substrate comprising a pedestal.
FIG. 39 shows an isometric view of the cavity plate of FIG. 37 overlapping with platform plate of FIG. 38.
FIG. 40 shows an overhead view of an example receptacle and disengagement members of the cavity plate of FIG. 37.
FIG. 41 shows a cross-sectional view of the example receptacle and pedestal along the line A-A in FIG. 40.
FIGs. 42 and 43 show an overhead view of example receptacles and disengagement members.
FIG. 44 shows a cross-sectional view of the platform plate of FIG. 38 having members of the pedestal positioned around an opening of the platform plate.
FIG. 45 shows a cross-sectional view of a portion of the cavity plate overlapping platform plate shown in FIG. 39.
FIG. 46 shows a cross-sectional view of a portion of the cavity plate overlapping platform plate shown in FIG. 39 with a substrate positioned on the members of the pedestal.
FIG. 47 shows a cross-sectional view of a portion of the cavity plate overlapping platform plate shown in FIG. 39 having a substrate provided on the pedestal coated with a coating layer.
FIG. 48 shows a cross-sectional view of a portion of the cavity plate overlapping platform plate shown in FIG. 45 having a substrate provided on the pedestal which is coated with a coating layer, and a cutting tool.
FIG. 49 shows a cross-sectional view of a portion of the cavity plate overlapping platform plate shown in FIG. 45 having precursor provided on the pedestal.
FIG. 50 shows a cross-sectional view of a portion of cavity plate overlapping platform plate shown in FIG. 49 having the precursor disengaged from the pedestal.
FIG. 51 shows a perspective cut away view of an example tail of the precursor shown in FIG. 2A.
FIG. 52 shows a perspective cut away view of another example tail of the precursor shown in FIG. 2A.
FIG. 53 shows is a perspective cut away view of another example tail of the precursor shown in FIG. 2A.
FIG. 54 is an fragmentary view of an example sealing area of coated substrate shown in FIG. 1.
FIG. 55 is an fragmentary view of another example sealing area of coated substrate shown in FIG. 1.
FIG. 56 is an fragmentary view of another example sealing area of coated substrate shown in FIG. 1.
FIG. 57 is a flowchart of an example method of manufacturing a coated substrate.

### DETAILED DESCRIPTION

The disclosure herein is directed to coated substrates and systems/methods of manufacturing coated substrates that have improved resistance to environmental contamination, improved performance characteristics, and/or provide ease of manufacturing.

Example substrates according to this disclosure may be fertilizer granules, fertilizer tablets, bio-fertilizer tablets, biocide tablets or granules, salt granules, herbicide granules or tablets, fungicide granules or tablets, insecticide granules or tablets, other pesticide granules or tablets, fertilizer-pesticide combination products in granular or tablet form, salt tablets, inorganic chemical granules, agriculture seed, animal feed products, detergent tablets or granules, pharmaceutical or nutraceutical tablets, pharmaceutical or nutraceutical capsules, confectionary articles, water treatment tablets, slimicide, bio-stimulant, inoculants, a solid food article, fruits, vegetables, or a water soluble solid core.

Although terms such as "maximize", "minimize" and "optimize" may be used in the present disclosure, it should be understood that such term may be used to refer to improvements, tuning and refinements which may not be strictly limited to maximal, minimal or optimal.

The term "secured to" or "connected" or "coupled to" may include both direct coupling (in which two elements that are coupled to each other contact each other) and indirect coupling (in which at least one additional element is located between the two elements).

The term "substantially" as used herein may be applied to modify any quantitative representation which could permissibly vary without resulting in a change in the basic function to which it is related. For example, a drive shaft as disclosed herein having a circular transverse cross-section may permissibly have a somewhat non-circular cross-section within the scope of present disclosure if its rotational driving capability is not materially altered.

The term "e.g.," "etc," "for instance," "for example," and "or and grammatically related terms indicating non-exclusive alternatives without limitation unless otherwise noted.

The term "including" and grammatically related terms means "including, but not limited to," unless otherwise noted.

The articles "a", "an", "the" are meant to be interpreted as referring to the singular as well as the plural, unless the context clearly dictates otherwise.

The term "coating composition" means a mixture or blend of two or more components. A coating composition may include two or more of the followings; polymer, processing additives, plant growth agents, plasticizer, waxes, co-initiators or cure catalysts, antioxidants, tackifiers, mineral fillers, oxo/photo biodegradation additives, antiblock additive, pigments, or lubricants, etc. The form of the "coating composition" is understood to be a liquid mixture of the different components, the components may be either dissolved or dispersed in solution, or may be an emulsion/micro-emulsion.

The term "molten" or "softened" defining a polymer herein means that the polymer is pliable to be thermoformed or vacuum formed.

The term "coating layer" means a layer of desired coating thickness of a polymer film coated onto a substrate. The term "coating layer", "polymer film" "polymer coating" are used interchangeably and will mean the same thing unless defined otherwise..

The term "substantial surface area" "substantially coat", or "substantially coated" means the coating layer covers more than 50% of the surface area but less than 100% surface area of the substrate being coted.

The term "excess coating layer" and "Tail", are used interchangeably and mean a portion of polymer film, extending away from the surface of the substrate, which is attached to the polymer film covering the surface area. The excess coating layer does not directly cover the surface of the substrate being coated.

The term "sealing area" means a portion of the coating layer having an area defined by the size of the excess coating layer sealed an coupled to the substrate and/or coating layer covering the surface of the substrate to encapsulate and seal the substrate. In an example, the seal area is formed by the melt fusion of the excess coating layer, wherein the excess coating layer melt fuses with itself under heat to form the sealing area. In another example, the excess coating layer may be coupled to the coating layer with an adhesive. Under SEM or other microscopes the sealing area may appear distinct from the rest of the coating layer. "Sealing area" or "sealing spot" may be used interchangeably herein.

The term "multiple coating layer" means a coating layer having multiple layer of polymer films. For example: a first coating layer of 30 micron thickness may be composed of a 20 micron thick PLA (Poly Lactic Acid) film and 10 microns of LDPE(Low density Polyethylene) film. A co-extruded multiple film of several polymers is an example of a multiple coating layer. A coating layer described herein may comprise a multiple coating layer.

The term "lamination" means adhesion of polymer film either with itself or with another surface via heat, pressure, or adhesive. Lamination includes heat lamination and Cold Lamination.

The term "heat lamination" means melt fusing of two polymer films using heat.

The term "cold lamination" means lamination of two films using only pressure or adhesive. Generally two films with adhesive layer are pressed together and the adhesive acts as a bonding agent for bonding the two films.

The term "polymer" means a polymeric compound prepared by polymerizing monomers, whether of the same or a different type. The generic term polymer comprises the term homopolymer, usually employed to refer to polymers prepared from only one type of monomer.

The term "biopolymer" or "natural polymer" means a polymeric compound either produced from plants or animals.

The term "copolymer", "interpolymer" and like terms means a polymer prepared by the polymerization of at least two different types of monomers. These generic terms include the traditional definition of copolymers, i.e., polymers prepared from two different types of monomers, and the more expansive definition of copolymers and interpolymers, i.e., polymers prepared from more than two different types of monomers, e.g., terpolymers, tetrapolymers, etc.

The term "blend" means a composition of two or more materials. Such a blend may or may not be miscible. Such a blend may or may not be phase separated. Such a blend may or may not contain one or more domain configurations, as determined from transmission electron spectroscopy, light scattering, x-ray scattering, and any other method known in the art.

The term "coating apparatus" means any commercially available apparatus that can apply the coating layer to a substrate. The coating apparatus may be: a hot melt extruder and die capable of producing a polymer film layer of desired thickness; hot melt polymer spray capable of producing a spray of hot melt polymer; Slot die coater capable of producing a coating layer; Slot nozzle capable of producing a coating layer; Curtain coater capable of producing a coating layer, UV or EB Coating equipment where coating layer is cured using Electronic beam or UV Lamps, or a Thermal film laminator where a polymer film can be heated via a heating source and applied or laminated onto a surface.

The term "coating station" means a place where the coating apparatus is mounted and coating layer is applied onto the substrate.

The term "pre-made polymer film" or "polymer film" means a polymer film that has been manufactured using any of the commercial film manufacturing process such as cast film extrusion, blown film extrusion process, or cast solution. The polymer film may comprise any processing aid or additives required to give a desirable chemical or mechanical properties to the polymer film.

The term "fertilizer" means any commercially available fertilizer granule of any shape or size, a fertilizer tablet, a fertilizer-pesticide tablet, or any chemical used for plant growth promotion.

The term "fertilizer of any shape or size" means that the fertilizer being coated can be of any shape, e.g., compacted chemicals produced by dry compaction process, tablets, spikes, briquettes, spherical, spheroid, capsule, or chemical salt crystals that does not have any particular shape.

The term "grid like pattern" means that substrates placed and held at a fixed distance from each other.

The term "cavity" means a housing for holding a substrate.

The term "pedestal" means one or more post(s) inside the cavity on which the substrate sits and may be held in position, e.g. either by friction, gravity, or vacuum pressure. The one or more post(s) may define a platform on which a substrate is received.

The term "conveyor belt system" is understood to be motor driven flat conveyor belt on which cavity and pedestal plates are coupled.

The term "hot pin" or "hot needle" or "heated platform" means a pin, platform, or post inside the cavity that can be heated via internal or external heat source to elevate the temperature of the pin or the platform.

The term "pin" or "pins" means a member having a sharpened end for coupling to a substrate.

The term "spot melting" means an area generally less than 50% of a total objection that is melted or softened by heat.

The term "melt fusion" means the substrate or the particulate matter are bonded together by melting and bonding of one material to another.

The term "embed" means the part of the pin is pushed into a surface of a substrate to bind to the substrate.

Aspects of various embodiments are described through reference to the drawings.

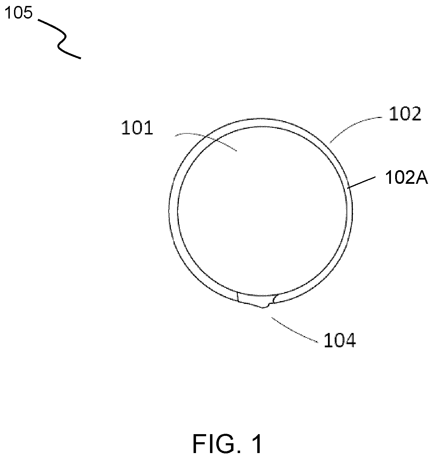

FIG. 1 illustrates an example coated substrate 105. The coated substrate 105 comprises a substrate 101 and a coating layer 102 encapsulating the substrate 101. Coating layer 102 comprises a primary portion 102A and a sealing area 104. Primary portion 102A may be a single unitary piece of polymer having edges sealed at sealing area 104. In an example, primary portion 102A may be stretched around substrate 101 to cover a substantial surface area of the substrate 101. Coating layer 102 may have a generally uniform thickness around the surface of substrate 101. In example, primary portion 102A of coating layer 102 covers more than 60% of the surface of substrate 101. In another example, primary portion 102A of coating layer 102 covers more than 75% of the surface of substrate 101. In another example, primary portion 102A of coating layer 102 covers more than 90% of the surface of substrate 101. In another example, primary portion 102A of coating layer 102 covers between 80% to 90% of the surface of substrate 101. In another example, primary portion 102A of coating layer 102 covers between 90% to 95% of the surface of substrate 101. As shown in FIG. 1, primary portion 102A is a single unitary piece of polymer film extending to sealing area 104 of coating layer 102 which encapsulates the remainder of the substrate 101 that primary portion 102A does not. As will be described herein, sealing area 104 may be formed by laminating excess coating layer 102 of coating layer 102 with itself, to primary portion 102A, and/or to substrate 101.

In an embodiment, sealing area 104 of coated substrate 105 may have a thickness generally greater than the primary portion 102A of coating layer 102. In another embodiment, the coated substrate 105 has a sealing area less than 40% of the total surface of the coated substrate. In yet another embodiment, the coated substrate 105 has a sealing area less than 20% of the total surface of the coated substrate . In yet another embodiment, the coated substrate 105 has a sealing area less than 10% of the total surface of the coated substrate. In an embodiment, sealing area 104 may have an area generally the same size as a pedestal on which coated substrate 105 is formed.

In an embodiment, coated substrate 105 may comprise a supplemental coating layer applied onto the first coating layer, or directly onto the substrate , the second coating layer at least partially encapsulating the substrate.

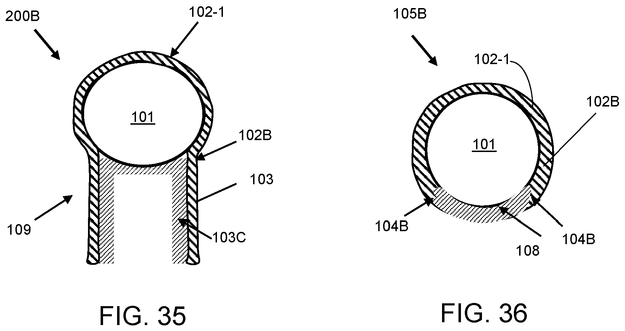

FIG. 36 illustrates another example coated substrate 105B. Similar to coated substrate 105, coated substrate 105B comprises a coating layer 102-1 encapsulating the substrate 101. Coating layer 102B comprises a primary portion 102B and a sealing area 104B. Primary portion 102B may be a single unitary piece of polymer having edges sealed at sealing area 104B. In an example, primary portion 102B may be stretched around substrate 101 to cover a substantial surface area of the substrate 101. Coating layer 102-1 may have a generally uniform thickness around the surface of substrate 101. Coated substrate 105B also comprises a reinforcing coating layer 108 coupled to sealing area 104B. In an embodiment, reinforcing coating layer 108 may be melt fused or adhered to sealing area 104B. In another embodiment, the coated substrate 105B has a sealing area 104B less than 40% of the total surface of the coated substrate. In yet another embodiment, the coated substrate 105B has a sealing area less than 20% of the total surface of the coated substrate . In yet another embodiment, the coated substrate 105B has a sealing area less than 10% of the total surface of the coated substrate. In an embodiment, sealing area 104B may have an area generally the same size as a pedestal on which coated substrate 105B is formed.

Substrate 105 may be a solid core. Non-limiting examples of a solid core includes organic fertilizers, inorganic fertilizers, mineral fertilizers, natural fertilizers, bio fertilizers, organo-mineral fertilizers, pesticides, fertilizer-pesticides products, complex compound fertilizer products, fertilizer of any shape or size, bio-stimulants, inoculants, Plant growth promoters, agriculture seeds, biocides, chemical salts, water treatment chemicals, Pharmaceutical tablets, nutraceutical products, confectionary articles, solid cores of any shape or size.

In an embodiment, coated substrate 105 has a coating layer 102, 102-1, 103C comprising at least one of a polymer, a polymer processing additive, , a mineral, a pigment, and/or plant growth agents (PGA). In some embodiments, coating layer 102 may be water soluble. In some embodiments, the coating layer is about 0.1% to 30% of the total weight of the substrate 101, preferably between 0.1% to 10% of the total weight of the substrate 101, more preferably between 0.1% to 5% of the total weight of the substrate 101.

In another embodiment, coating layer 102, 102-1, 103C may be a commercially available thermoplastic polymer for film extrusion, for example a commercially available extrusion coating grade polymers. Example commercial grade polymers for melt extrusion in film form is available in the following publications; Biopolymer: Processing & Products/By Michael Niaounakis/PDL Handbook Series/ William Andrew, Inc (2014), Handbook of Biodegradable Polymers-Synthesis Characterization and Application/ edited by Andreas Lendlein and Adam Sissoon/Published by Wiley VCH (2011).

In another embodiment, coating layer 102, 102-1, 103C may comprise a thermoplastic polymer selected from: Polyacetals, Nylons, Polyethylene (PE) of different molecular weights and densities (PE) , Polypropylene (PP), polystyrene (PS), polyvinyl chloride (PVC), polymethylmethacrylate (P MMA or acrylic), acrylonitrile butadiene styrene (ABS), polycarbonate (PC) Polyesters, polyethylene terephthalate (PET), polybutylene terephthalate (PBT) polyamide (PA or nylon) , polyphenylene sulfide (PPS), polyphenylene oxide/polystyrene blend, polyetherimide (PEI), polysulfone (PSO), and their blends and copolymers.

In another embodiment, coating layer 102, 102-1, 103C may comprise a thermoplastic elastomer polymer is selected from: Styrene-butadiene rubber, Butadiene rubber, Isoprene, Butyl Rubber ,Chloroprene rubber, Nitrile rubber, Ethylene-Propylene rubber (EPM and EPDM), Silicon rubbers, Polyureas, Polyurethanes, or their blends or derivatives.

In another embodiment, coating layer 102, 102-1, 103C may comprise biodegradable thermoplastics polymer selected from: Polyglycolide, Poly(lactide-coglycolide) (PI-GA), Poly(butylene succinate) (PBS) and its copolymers, Poly(pdioxanone) (PDO or PPDO), Polycaprolactone (PCL), Polyhydroxyalkanoates (PHA), Polyhydroxybutyrate (PHB), Polyhydroxyvalerate (PHV), Polylactic acid (PI-A), biodegradable Polycarbonate, Polyvinyl alcohol (PVOH), Polyvinyl Acetate (PVA), and their copolymers and derivatives.

In another embodiment, coating layer 102, 102-1, 103C may comprise biodegradable or non-biodegradable thermoplastic polymer of natural or synthetic origin, thermoplastic elastomers, thermosetting polymer, Alkyd resin, UV or EB curable resin, Biopolymers, recycled polymers, and natural Polymers, their copolymers or blends. In yet another embodiment, the biopolymers or natural polymer may be selected from: Cellulose derivatives, Polysaccharides, Chitin and Chitosan polymers, Proteins, or Gelatins. There are numerous commercial products available for use in coating applications which are contemplated by this disclosure.

Example commercial grade biodegradable polymers for a coating layer describe herein may include: PLA resin from NatureWorks^{®} 2000 series: 2003D TDS NatureWorks^{®} 3000 series: 3001D SDS 3052D SDS 3251D SDS 3801X SDS, NatureWorks^{®} 4000 series: 4032D TDS, 4043D TDS, 4060D TDS, NatureWorks^{®} 6000 series: 6060D TDS, 6201D TDS, 6202D TDS, 6204D TDS 6400D TDS 6251D TDS 6252D TDS 6302D TDS 6751D TDS 6752D TDS, NatureWorks^{®} 7000 series: 7001D TDS, 7032D TDS, Recycled PLA such as LOOPLA^{®} , Galacid^{®} from Galactic (Belgium), Futerro Total/Galactic (Belgium), PLA/PCL blend: VYLOECOL BE-4001 VYLOECOL BE-600 VYLOECOL BE-910 VYLOECOL HYD-306 VYLOECOL BE-450 VYLOECOL BE-410 VYLOECOL HYD-006 from Toyobo (Japan); Ecodear^{®} series from Toray Industries (JP) are blend of PLA/Polyether copolymer BIO-FLEX^{®} series of PLA (Nature- Works)/ copolyester blend from FKuR Kunststoff GmbH (DE); Polycaprolatone: CapaTM 6000 and 7000 series, Celgreen PH, Placcel^{®} 200 series Placcel^{®} 300 series Placcel^{®} F series (macro-monomers) Placcel^{®} H1P (Mw 10,000), Tone^{®} series from DOW; PBS (polybutylene succinate) under brand name BionolleTM 1000 and PBSA (polybutylene succinate-adipate) under brand name BionolleTM 3000 series from Showa High Polymer Co Ltd (JP), PBSA under brand name SkygreenTM SG200 from SK Chemicals (South Korea); PBSL ( polybutylene succinate-co-lactate ) under brand name GS Pla^{®} AD92W, GS Pla^{®} AZ91T, and GS Pla^{®} GZ95T from Mitsubishi Chemical (JP) PES - poly(ethylene succinate) under band name Lunare SE^{®} from Nippon Shokubai (JP); PBAT (polybutylene adipate-co-terephthalate) Ecoflex^{®} series from BASF (Germany), Origo-Bi^{®} (ex Eastar Bio^{®}1) from Novamont (Italy).

Example commercially available thermoplastic starch based starch polymers for a coating layer describe herein may include: Mater-Bi^{®} from Novamont (IT), Plantic^{®} HP Plantic^{®} R1 from Plantic (AU), BIOPLAST GF 106/02 BIOPLAST GS 2189 BIOPLAST WRAP 100 BIOPLAST TPS from Biotec (Germany), Biolice^{®} from Limagrain (FR), Solanyl^{®} BP, Solanyl^{®} C1xxx grades (injection molding): C1001,C1201, C1203, Solanyl^{®} C2xxx grades (thermoform grade) C2201, Solanyl^{®} C8xxx grades (blown film):C8101 C8201.

Example commercially available thermoplastic chitin based polymer for a coating layer described herein may be obtained from: Primex Corporation, Iceland (IS), Biopolymer Engineering, Inc. (USA), Biopolymer Technologies, Inc. (USA), and CarboMer, Inc. (USA).

Examiner commercial grade Poly(vinyl alcohol) (PVOH) for a coating layer described herein may include: High purity PVOH available under brand name GOHSENOL EG series: EG-05, EG- 05P, EG-40, and EG-40P, from Nippon Synthetic Chemical Industry Co. Ltd (JP), Anionic PVOH available under brand name GOHSENAL series: T330H, T-300, T- 350 from Nippon Synthetic Chemical Industry Co. Ltd (JP), Hydrophilic group-modified PVOH available under brand name ECOMATY series: WO-320R WO-320N also from Nippon Synthetic Chemical Industry Co. Ltd (JP), Modified PVOH with a sulfonic group (-SO3X group) on its side chain available under GOHSERAN series, and Low saponification hydrophilic PVOH available under GOHSEFIMER series from Nippon Synthetic Chemical Industry Co. Ltd (JP). Mowiol^{®}/Kuraray POVAL^{®} Mowiflex TC^{®}, Exceval, Kuraray POVAL^{®} K, Kuraray POVAL^{®} L, Kuraray POVAL^{®} LM, and Kuraray POVAL^{®} R from Kuraray (JP). PVOH-co-plasticizer (polyalkyleneoxy acrylate) under VINEX^{®} from Air Products & Chemicals. PVOH, amorphous under brand name Nichigo G-Polymer Powder type: AZF8035W OKS- 6026 OKS-1011 OKS-8041 OKS-8049 OKS-1028 OKS-1027 OKS-1109; Pellet type: OKS-8049P OKS-8084P OKS-8042P from Nippon Gohsei (JP).

In an embodiment, the coating layer may comprise a wax including paraffin waxes, Fischer- Tropsch waxes, by-product polyethylene waxes, high-density low molecular weight polyethylene waxes, microcrystalline waxes, vegetable waxes, and combinations thereof.

In an embodiment, the coating layer may comprise tackifying resins or tackifiers. tackifying resins or tackifiers may be used to modify the tackifying, wetting, and adhesion character of the coating layer. Example tackifying resins or tackifiers may include: low-molecular-weight polymers based on aliphatic or aromatic hydrocarbons, rosins, rosin esters, terpenes, styrene or phenol derivatives, styrenated terpene, terpene-phenolic resin, aliphatic hydrocarbon resin, aromatic-modified aliphatic resin, aromatic hydrocarbon resin α-methyl styrene resin, hydrogenated hydrocarbon resin, and aromatically-modified hydrocarbon resin, or any of these in combination. The formulations may include stabilizers and anti- oxidants to prevent premature viscosity change and char or gel formation that could lead to equipment stoppage.

In another embodiment, coating layer 102, 102-1, 103C comprises one or more plant growth agents (PGA) dispersed in the polymer film matrix. The PGA may be configured to be release via by degradation of the film or by leaching out of the PGAs from the film matrix upon contact with liquid medium or water. The rate of release of PGAs are controlled by the rate of biodegradation and rate of leaching of the PGAs form the matrix of the polymer film. Polymer films with different rate of biodegradation may have different PGAs release rates, the water solubility or the PGAs and miscibility of PGAs with the polymer also affect the rate of release of PGAs from the film matrix. In some embodiments the PGAs are applied along with surfactants that promote the release of PGAs from the film matrix.

In some embodiments, coating layer 102, 102-1, 103C comprises antimicrobial agents or anti ripening agents blended/mixed with a polymer film matrix. The antimicrobial agents or anti ripening agents may be released through the polymer film in a slow release manner. In an example, antimicrobial agent filled polymer film may be coated onto a substrate for human consumption such as fruits and vegetables.

In some embodiments, coating layer 102, 102-1, 103C comprises a pharmaceutically active ingredient (PAI) dispersed or dissolved in the matrix of the polymer. The PAI may be mixed in the polymer via hot melt extrusion, the hot melt extruded film layer may then applied onto the surface of substrate, e.g. a pharmaceutical dosage form such as tablet, capsule, caplet, or soft gel tablets/capsule. Polymer film for hot melt extrusion may be manufactured from pharmaceutical grade polymers in dry pelleted form, extruded into a thermoformable film. Example polymer for use in pharmaceutical applications may be Non-enteric polymers, Hypromellose, Hydroxyethyl cellulose, Hydroxyethyl methyl cellulose, Carboxymethyl cellulose sodium, Hydroxypropyl cellulose, Polyethylene glycol, Ethyl cellulose. Polymers for enteric coating may include Hypromellose phthalate, Polyvinyl acetate phthalate, Cellulose acetate phthalate, Polymethacrylates, and Shellac.

In some embodiments, coating layer 102, 102-1, 103C comprises styrene block copolymers, polyolefins (e.g. amorphous and crystalline polyolefin including homogeneous and substantially linear ethylene/alpha-olefin inter-polymers), interpolymers and copolymers of ethylene including, e.g., ethylene- vinyl acetate, ethylene- vinyl acetate ethylene-acrylic acid, ethylene-methacrylic acid, ethylene-methyl acrylate, ethylene-ethyl acrylate and ethylene n-butyl acrylate and derivatives (e.g., incorporating at least two comonomers), polyacrylic acids, polymethacrylic acids, polyacrylates, polyvinyl acetates, polylactic acids, polylactides, caprolactone polymers, poly (hydroxybutyrate/hydroxyvalerate), polyvinyl alcohols, polyesters, copolyesters (e.g. ,biodegradable copolyesters), poly(ethylene oxide)polyether amide, polyester ether block copolymers, polyvinyl pyrrolidone, polyvinyl pyrrolidone- vinyl acetate copolymer, polyetheroxazoline, polyvinyl ethers (e.g., polyvinyl methyl ether), polyamides, polyurethane, polyacrylamide, Polyesters, and combinations and blends thereof.

In some embodiments, coating layer 102, 102-1, 103C may comprise a plurality of polymer film layers pre-laminated together to reduce shrinkage of coating layer during application to a substrate described herein.

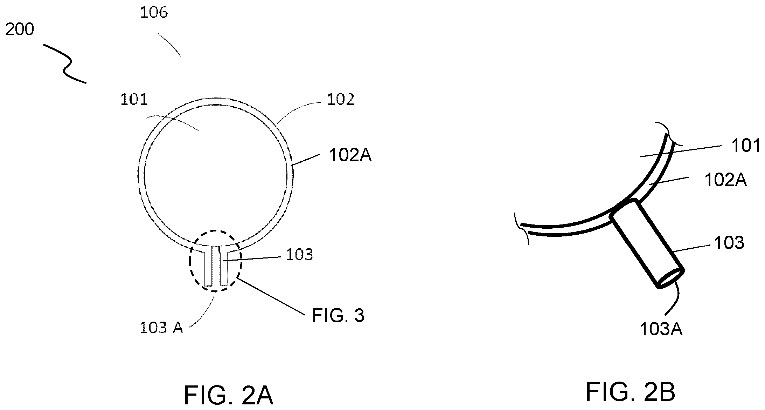

FIGs. 2A illustrates a precursor 200 to the coated substrate 105 illustrated in FIG. 1. Sealing area 104 comprises excess coating layer 103 of coating layer 102 extending away from the surface of substrate 101. As illustrated, excess coating layer 103 is a continuous extension of coating layer 102 and may extend away from the surface of substrate 101 at any angle, e.g. generally perpendicular to the surface of substrate 101 as shown in FIGs 2A and 2B. In an embodiment, excess coating layer 103 shown in FIG. 2B may have a generally cylindrical shape before it is transformed into sealing area 104. As described below with respect to the manufacturing methods of producing coated substrate 105, excess coating layer 103 may be coupled to substrate 101 and/or primary portion 102A , e.g by lamination. In an embodiment, sealing area 104 is formed by coupling excess coating layer 103 of the coating layer 102 to primary portion 102A adjacent to excess coating layer 103 and/or to substrate 101. Excess coating layer 103 may have a generally tubular shape having edges defining opening 103A of the coating layer. Sealing area 104 may be formed by melting the excess coating layer 103 and laminating it to primary portion 102A of coating layer and/or substrate 101.

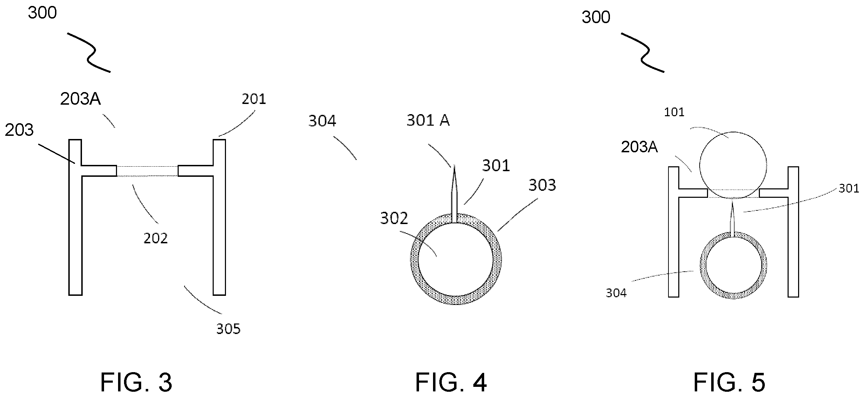

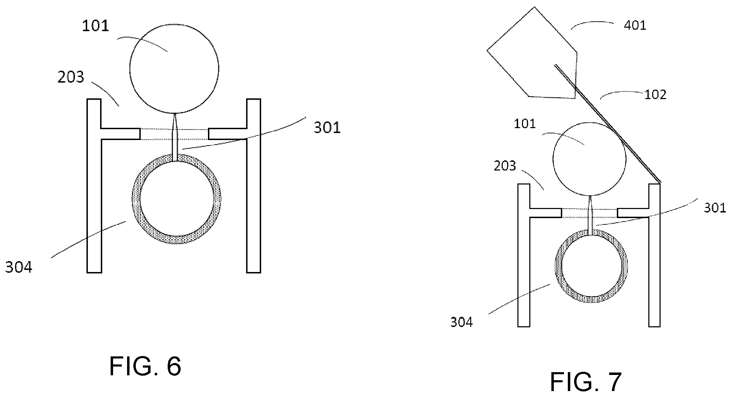

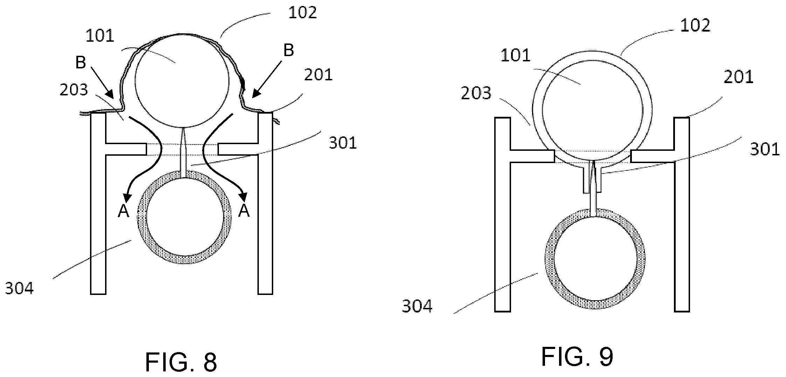

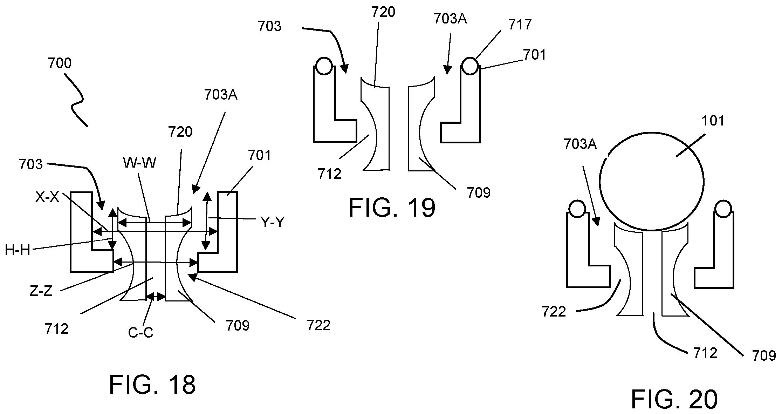

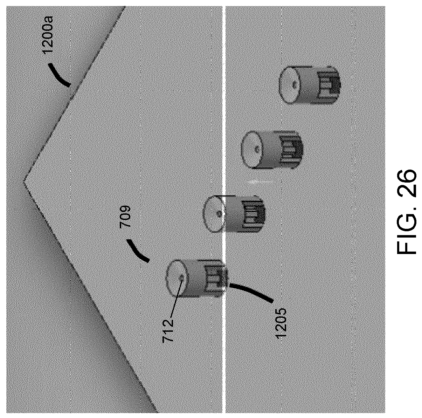

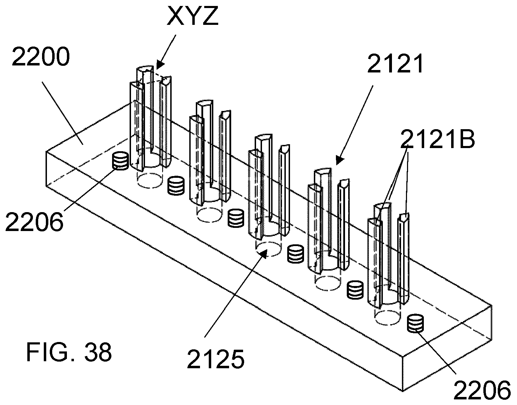

FIGs. 3-12 illustrates an example system 300 for manufacturing a coated substrate described herein. System 300 may comprise a feed device (now shown) configured to feed substrate 101 into receptacle 203, where each receptacle 203 has a counterpart pedestal. A pedestal may have various designs, e.g. pin 301 shown in FIG. 4, pedestal 409 shown in FIG. 18-22, pedestal 203 shown in FIG. 26, pedestal 2121 shown in FIG. 38. Feed device may be any suitable device for delivering a substrate to receptacle 203 of system 300. In an example feed device may be hopper and/or may comprise a vibratory feeding device with channels align to feed one or more receptacle 203 of system 300 with substrate 101. Receptacle 203 may define a cavity 203A for receiving substrate 101. As shown in FIGs. 3 and 5, receptacle 203 may define an opening 202 having an area configured to receive and hold substrate 101. Each pedestal is movable relative to its counterpart receptacle 203 through opening 202, and each pedestal is configured to have an extended position in which the pedestal is extends into its counterpart receptacle to engage the substrate on the pedestal. In an example, the pedestal is configured to translate along its longitudinal axis through opening 202 the counterpart receptacle without horizontal displacement to engage substrate 101 or disengage from substrate 101. Receptacle 203 may have a raised edge 201 defining a lateral surface at the periphery of receptacle 201 for receiving a coating layer. A first coating apparatus 401, e.g. a polymer film extruder, may be configured to apply a coating layer 102 to receptacle 203. As shown in FIG. 7, substrate 101 may be received in receptacle 203 prior to application of coating layer 102 to receptacle 203. A biasing device configured to bias the polymer coating around the substrate and a portion of the pedestal may be provided. As shown in FIG. 8, in an example, biasing device may be vacuum pump configured to apply vacuum pressure (illustrated as lines A) pulling coating layer 102 around substrate 101 and a portion of the pedestal. In an example, vacuum suction air flow may be maintained (depending on the thickness of the polymer film) between 20 cubic feet per min (CFM) to 200 CFM (ft3/min) through opening 202. In another example, biasing device may also be an air pump configured to apply pressure (illustrates as line B in FIG. 8) to bias coating layer 102 around substrate 101 and a portion of the pedestal. Once coating layer 102 is wrapped around substrate 101 and a portion of the pedestal, the pedestal may be withdrawn from its counterpart receptacle 203 disengaging the pedestal from the substrate 101 and coating layer 102 to form a coated substrate having a tail 103. Substrate 101 may disengage from the pedestal as the pedestal is withdrawn from receptacle 203 causing substrate 101 to engage with a portion of receptacle 203 defining opening 202. FIG. 9 illustrates an example pedestal, i.e. pin 301, in a withdrawn position to disengage the pedestal from substrate 101 and polymer coating 102 to form a coated substrate having a tail 103. After the pedestal is withdrawn from the substrate 101, precursor 200 is formed and tail 103 may be sealed to the polymer coating 102 and/or substrate 101 to encapsulate the substrate and form a coated substrate. As shown in FIG. 8, precursor 200 may be re-positioned to orient tail 103 of precursor 200 to face a sealing system configured to seal the tail to the polymer coating 102 and/or substrate 101. In an example, shown in FIG. 8, sealing system may comprise heating device 404 which melts the tail 103 causing the polymer of the tail 103 to fuse together and form sealing area 104. The sealing system may also comprise roller 403 to press the laminate tail 103. Coated substrate 105, shown in FIG. 1, having substrate 101 encapsulated by coating layer 102 and distinct sealing area 104 is then produced.

FIGs. 4 and 5 illustrate an example system 300 comprising a heated pin system 304. As shown, receptacle 203 may define a second cavity 305 for housing heated pin system 304. After substrate 101 is received in cavity 203A of receptacle 203, heated pin system 304 may be moved relative to receptacle 203 toward substrate 101. Pin 301 may be heated by heating element 302 to a desired temperature, e.g. a temperature in the range of 50°C to 700 _{°}C. In an embodiment, the desired temperature of pin 301 is a higher temperature than a melting point of substrate 101. In another embodiment, tip 301A of pin 301 is at temperature higher than the melting point of the substrate to melt a surface of the substrate. Tip 301A of heated pin 301 may contact substrate 101 to adhere pin 301 to substrate 101 by spot melting a small area of substrate 101. Pin 301 may cool down below a melting point of substrate 101 causing tip 301A of the pin 301 embed into substrate 101 to secure substrate 101 to pin 301 such that pin 301 may be supported solely on pin 301. In an embodiment, heating element 302 may be configured to provide energy to pin 301 selected from a range between 10 watts/square inch to 100 watts/square inch, depending on the melting temperature of the substrate 101. Pin 301 may be made of stainless Steel of any available commercial grade, copper, bronze or other material of high thermal conductivity. Pin 301 may also be treated with a layer of non-stick coating such as PTFE or such material, and may have a sharpened tip 301A on a distal end having a thickness/diameter generally less than the thickness/diameter of pin 301. In an embodiment, pin 301 may have diameter ranging from 0.01 mm to 5 mm. The diameter of pin 301 may be selected by the size of the substrate and weight of the substrate. A selected pin diameter may be based on a minimum thickness that can withstand a weight of the substrate 101 and pull of the coating layer 102 under vacuum. In an example, for a substrate diameter between 1 mm to 8 mm a 0.2 mm to 0.5 mm diameter pin may be used. Other pin diameters are also envisioned by the present disclosure.

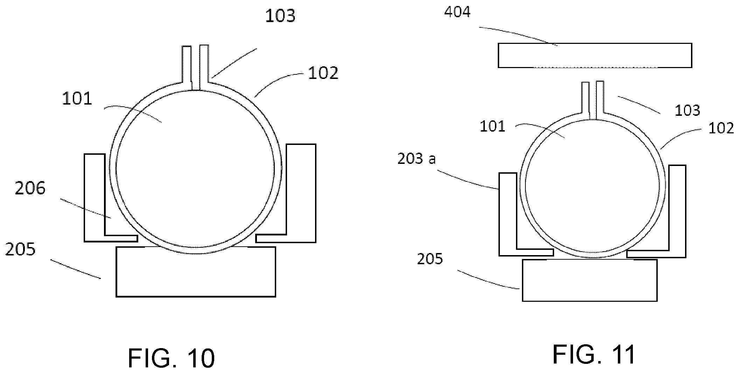

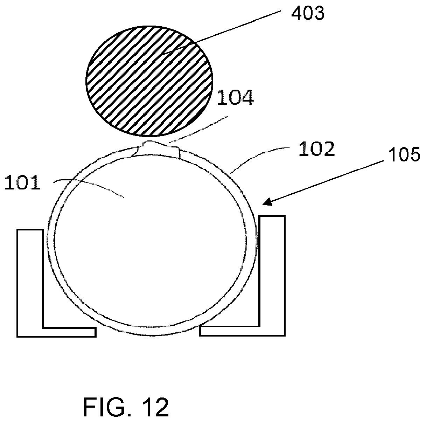

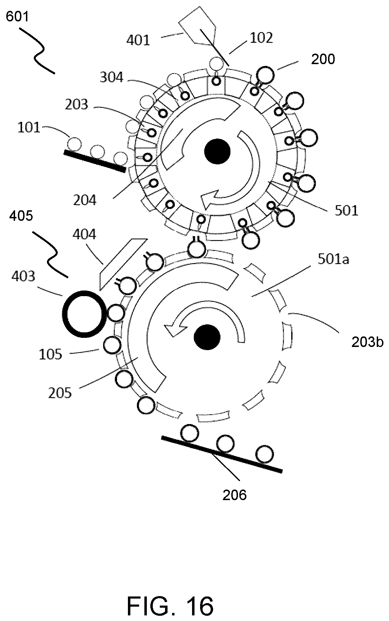

Continuing the above example, heating system 304 housed in the cavity 305 comprising the heating element 302, and insulating material 303 to minimize heat loss and potential damages to other elements of system 300. Pin 301 may be coupled directly to heat element 302 and is heated by heat element 302. The heat element 302 may be connected to an external controller (Not shown) that controls the temperature of the heat element. Heating system 304 may also be configured to move vertically on its longitudinal axis inside the cavity 305 to move through, or withdraw from, opening 202 without horizontal displacement. Substrate 101, secured to pin 301, may be move a distance away from receptacle 203 to provide clearance for coating layer 102 to be wrapped around substrate 101 and a portion of pin 301. Coating apparatus 401 may apply coating layer 102 onto substrate 101 and raised edge 201 of receptacle 203 as shown in FIGs. 7 and 8. In an embodiment, coating apparatus 401 may be a extrusion coater, slot-die coater, melt spray coater, curtain coater, electrostatic coater, thermal film lamination coater, UV or Electric beam cured coater. Coating apparatus 401 may also be a thermoforming system, in the modified thermoforming system a polymer film 102 is heated with a suitable heating system to soften the polymer film so that it can be easily thermoformed, a suitable heating system may be a heated cylinder roll, hot air blower heater, Infrared Heating system, or other thermal heat source may be used, the softened film is then applied onto the substrate and receptacle. Coating layer 102 may be pulled around the substrate 101 using a vacuum suction through opening 202 (illustrated by line A in FIG. 8) or by pushing coating layer 102 around substrate 101 using an air pump (illustrated by line B in FIG. 8). Application of vacuum or air pressure to coating layer 102 may break off coating layer 102 from raised edge 201 of receptacle 203 to substantially encapsulate the substrate 101 and a portion of the pedestal, e.g. pin 301 shown in Figure 9. Heated pin system 304 may then be withdrawn from cavity 203A by moving downward along its vertical axis to create precursor 200. Precursor 200 may be transferred to another surface, e.g. roller surface 501A illustrated in FIG. 16, to expose tail 103. A heating device, e.g. heating device 404 shown in FIGs. 11 and 16, may melt tail 103 to encapsulate substrate 101 as tail 103 melt fuses with itself and/or coating layer 102 to provide sealing area 104 and create coated substrate 105. A roller, e.g. cushion roller 403, may also be provided to presses the and laminate tail 103 with itself and/or coating layer 102 to produce coated substrate 105 (Figures 1 and 12) having substrate 101 encapsulated by coating layer 102 and distinct sealing spot 104.

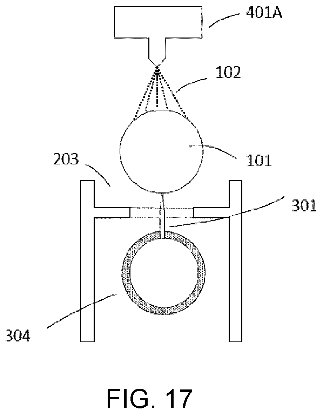

FIG. 17 illustrates an embodiment of a coating apparatus 401. As shown, heated pin system 304 comprises pin 301 covered with an electrically insulation material, e.g. electrical tape, tip 301A remains uncovered, and the heated pin system 304 is connected to an earthing station (not shown). Receptacle 203 may be made of electrically neutral material. As substrate 101 is held up by pin 301 it may be passed under an electrostatic coating or paining station 401A and a coating composition is sprayed onto substrate 101 to form a coating layer 102 onto the exposed surface of substrate 101 and a portion of pin 301. Any commercially available electrostatic coating material may be used. Coating layer 102 may be dried off or cooled down depending on nature of the polymer used (e.g. dry or solvent based) to form precursor 200. Thereafter, precursor 200, may be treated with heating device and/or roller as described above to produce coated substrate 105.

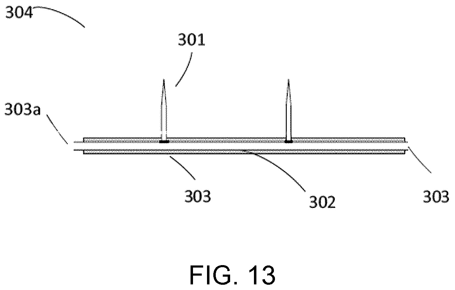

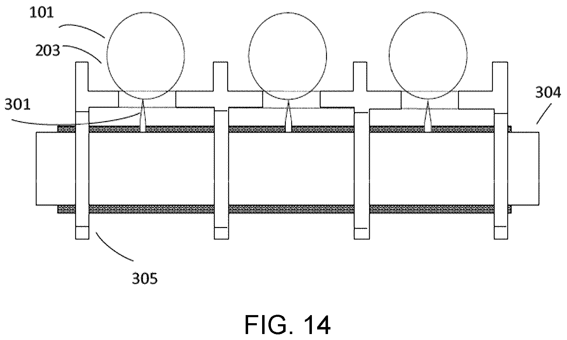

FIGs 13 and 14 illustrate an example of system 300 for manufacturing a coated substrate. As shown, system 300 may comprise a plurality of receptacles 203 each having a counterpart pedestal, e.g. pin 301. Each receptacles 203 may be arranged adjacent to one another for receiving a substrate 101 into each receptacle. FIG. 14 illustrates three receptacles; however, a plurality of receptacles 203 may be provided. As described above, each receptacles has a counterpart pedestal, e.g. pin 301, movable relative to its counterpart receptacle 203. In the illustrated embodiment, each pin 301, may be coupled a heating system 304 comprising a base 303a, heating element 302, and insulation material 303. Base 302a may be configured to move relative to receptacles 203 to translate pins 301 along their longitudinal axis through the respective opening 202 of receptacles. A substrate 101 may be feed to each of the plurality of receptacles 203 and coated by system 300 as described above to provide a plurality of coated substrate 105.

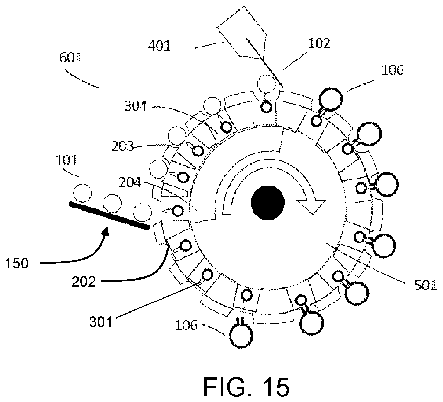

FIGs. 15 and 16 illustrate an example apparatus 601 comprising system 300 for manufacturing a coated substrate. Apparatus 601 comprises system 300 described above incorporated into a rotating drum 501. More specifically, system 300 is positioned around the surface of rotating drum 501. Feed device 105, e.g. a vibrating feed device, feeds a plurality of substrate 101 each to a plurality of receptacles 203 positioned around the circumference of drum 501. Each of the plurality of receptacles 203 may receive a substrate 101 as it passes feed device 105. In the illustrated embodiment, drum 501 may be fitted with a vacuum box 204 to pull vacuum through the openings 202 in the receptacle 203. Cavity 305 and 203A (better shown in FIG. 3) are connected through opening 202 through which vacuum suction may be pulled. Vacuum pressure may be adjusted according to the thickness of the polymer film to be applied to each substrate 101 and its pulling behavior under heat or plasticization of the polymer. As each receptacle 203 rotates past feed device 105, vacuum box 204 may suction a substrate 101 into the receptacle. Each receptacle 203 may be at a fixed distance from the each other on the peripheral surface of drum 501 and each receptacle 203 has a corresponding pedestal, e.g. a pin 301 of a heated pin system 304 housed in the cavity 305 as shown in FIGs. 3, 4, and 5. Cavity 305 (better shown in figure 3 and 5) houses a heating system 304 (better shown in figure 4). As describe above, heating system 304 may spot melt onto the surface of the substrate 101 using the tip 301A. Heating pin system 304 may be connected to an external control (not shown) to control the temperature and timing of heating of the pin 301, and the pins movement relative to receptacle 203.

The heating system 304 is configured to translation along its longitudinal axis to that pin 301 moves through opening 202 into cavity 203A of receptacle 203 to engage tip 301A of the pin 301 into contact with the surface of the substrate 101. Tip 301A may melt a small spot of the surface of substrate 101 to embed tip 301A into substrate 101. After tip 301A is embedded, temperature of is reduced at the time of the contact between pin 301 and substrate 101 causing the spot melted area to cool down to couple tip 301A to the surface of substrate 101. Pin 301 may raise substrate 301 a distance from receptacle 203 to permit a coating layer to be applied to substantially encapsulate substrate 101 and a portion of pin 301. Drum 501 may continuously rotate to move substrate 101 to coating apparatus 401, e.g. a polymer film extruder, slot-die coater, melt spray coater, curtain coater, electrostatic coater, thermal film lamination coater, or UV or Electric beam cured coater, which is configured to apply coating layer 102 to receptacle 203 and substrate therein. Coating layer 102 is vacuum formed to cover a substantial surface area of the substrate 101 and a portion of pin 301 creating precursor 200. Drum 501 may continue to rotate until receptacle 203 no longer communicates with vacuum box 204. Pin 301 may be withdrawn through opening 202 to disengage precursor 200 from pin 301. In an example, pin 301 is withdrawn when precursor 200 is above a receptacle 203b of drum 602 allowing precursor 200 to fall into one of a plurality of receptacles 203b position around the surface of drum 602. Drum 501a may comprise a vacuum box 205 to hold precursor 200 in a counterpart receptacle 203b with vacuum. A sealing system 405 may comprise heating device 404 configured to melt tail 103 of precursor 200 causing polymer of the tail 103 to fuse together and form sealing area 104. Sealing system 405 may also comprise roller 403 to laminate tail 103. Coated substrate 105 may then be rotated to a collection device 206 where receptacles 203b no longer communicates with vacuum box 205 allowing coated substrate 105 to disengage and transfer to collection device 206.

FIGs. 18-23 illustrates an example system 700 for manufacturing a coated substrate described herein, e.g. precursor 200 and coated substrate 105. System 700 may comprise a feed device (not shown) configured to feed a substrate 101 into receptacle 703, where each receptacle 703 has a counterpart pedestal. As described above, pedestal may have various designs. As shown in FIG. 18-20, pedestal 709 defines channel 712 within pedestal 709 extending to a platform 720 configured to receive substrate 101. Receptacle 703 may have width/diameter X-X and depth Y-Y configured to receive substrate 101 and permit engage of pedestal 709 with substrate 101. Opening 722 may have a width/diameter Z-Z configured to permit pedestal 709 to translate through opening 722 while preventing substrate 101 from passing through opening 722. Width/Diameter Z-Z may also allows clearance of pedestal 709 when partially coated by coating layer 702. Diameter X-X of the receptacle 703 may be maintained generally at twice the diameter of the substrate 101. Feed device may be any suitable device for delivering a substrate to receptacle 703 of system 700. As noted above, in an example, feed device may be hopper and/or may comprise a vibratory feeding device with channels align to feed one or more receptacle 703 of system 700 with substrate 101. Receptacle 703 may define a cavity 703A for receiving substrate 101. As shown in FIGs. 3 and 5, receptacle 703 may define opening 722 having an area configured to receive and hold substrate 101. Each pedestal is movable relative to its counterpart receptacle 703 through opening 722, and each pedestal is configured to have an extended position in which the pedestal is extends into its counterpart receptacle to engage the substrate on the pedestal. In an example, the pedestal is configured to translate along its longitudinal axis through opening 722 the counterpart receptacle without horizontal displacement to engage substrate 101 or disengage from substrate 101. In its extended position, pedestal 709 may receive substrate 101 on platform 720. Vacuum pressure may provide suction through channel 712 to pull substrate 101 to engage and/or maintain engagement with platform 720. Channel 712 may have a width/diameter C-C configured to provide a suction force for securing substrate 101 to platform 720. Receptacle 703 may have a raised edge 701 at the periphery of receptacle 703 for receiving a coating layer. A first coating apparatus, e.g. a polymer film extruder 741, may be configured to apply a coating layer 702 to receptacle 703. As shown in FIG. 20, substrate 101 may be received in receptacle 703 prior to application of coating layer 702 to receptacle 203. Receptacle 203 may receive substrate 101 prior to extending pedestal 709 to cavity 703A or after pedestal 709 is extended into cavity 703A.

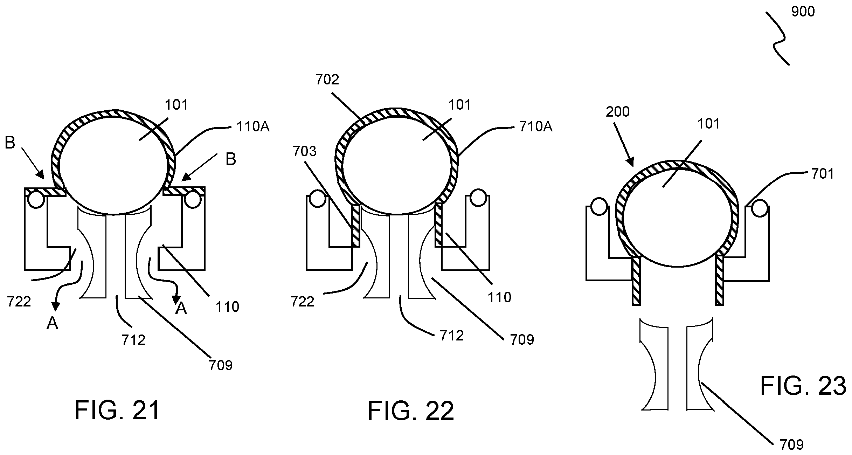

FIG. 21 illustrates system 700 after coating layer 102 is applied to receptacle 703 and substrate 101. A biasing device configured to bias the polymer coating around the substrate and a portion of the pedestal may be provided. In an example, biasing device may be vacuum pump configured to apply vacuum pressure (illustrated as lines A in FIG. 21) pulling coating layer 702 around substrate 101 and a portion of the pedestal to form precursor 200 shown in FIG. 22. In an example, vacuum suction air flow may be maintained between 20 cubic feet per min (CFM) to 200 CFM (ft3/min) through opening 722. In another example, biasing device may also be an air pump configured to apply pressure (illustrates as line B in FIG. 21) to bias coating layer 702 around substrate 101 and a portion of the pedestal.

In the embodiment illustrates in FIGs. 19-23 system 700 comprises receptacle 703 having a receptacle heating system 717 for heating coating layer 702. As shown, receptacle heating system 717 may be position on edge 701 of the cavity 703A, the heating system 717 may heat melt coating layer 702 to separate from edge 701 under bias from the biasing device. For example, biasing device may vacuum pull, through opening 722, heat melted/softened film 702 to envelope the substrate 101 and a portion of pedestal 709. In an example, receptacle heating system 717 may be heating coil around edge 701. In example, receptacle heating system 717 may maintain a temperature between 50°C to 300°C, or between 60 _{°}C to 200 _{°}C, or between 100 _{°}C to 200 °C depending on the heat melt characteristics of coating layer 702.

Continuing the above example, once coating layer 702 is wrapped around substrate 101 and a portion of the pedestal 709, the pedestal may be withdrawn from its counterpart receptacle 703 disengaging the pedestal from the substrate 101 and polymer coating 702 to form a coated substrate having a tail 703. Substrate 101 may disengage from the pedestal as the pedestal is withdrawn from receptacle 703 causing substrate 101 to engage with a portion of receptacle 703 defining opening 722. FIG. 23 illustrates an example pedestal, in a withdrawn position disengaged from substrate 101 and polymer coating 102 to form a coated substrate having a tail 103. After the pedestal is withdrawn from the substrate 101, precursor 200 is formed and tail 103 may be sealed to the polymer coating 102 and/or substrate 101 to encapsulate the substrate and form a coated substrate. As described above with respect to FIG. 8, precursor 200 may be re-positioned to orient tail 103 of precursor 200 to face a sealing system configured to seal the tail to the polymer coating 102 and/or substrate 101 to form coated substrate 105 having sealing area 104.

As described above, a receptacle and counterpart pedestal may have different dimensions depending on the substrate. In an example, substrate 101 may be a NPK (15-15-15) fertilizer tablet prepared via a commercially available tablet press (TDP-5) to provide a urea tablet having a diameter of 10 mm and thickness of 8 mm. Receptacle 203, 703 may have the following dimensions: Width/Diameter X-X of the receptacle is 25 mm; depth Y-Y is 20 mm; width/diameter W-W of the pedestal is 5 mm; width/diameter C-C of channel is 2 mm; depth H-H of pedestal from the bottom of the receptacle is 18 mm; diameter Z-Z of the opening of the receptacle is 10 mm. A polymer film of 25 micron of commercial Polylactic Acid (PLA) film was used for coating, the film was heated via a overhead heater ad softened enough so that it s can be thermoformed, vacuum suction is applied via opening in the receptacle and the PLA film coats the fertilizer tablet and covers a substantial surface area and also creates a tubular excess film of 5 mm (approximate) in diameter and 8 mm in length. The excess film was heated via a heating device to weld the excess film to the coating layer and to the fertilizer surface that remained uncoated so that the fertilizer tablet was encapsulated between the coating layer and welding spot (i.e. sealing area). This produced a fully coated substrate 105 (as presented in FIG. 1), the average coating weight of the coated fertilizer tablet 105 was around 2% of the total weight of the coated tablet.

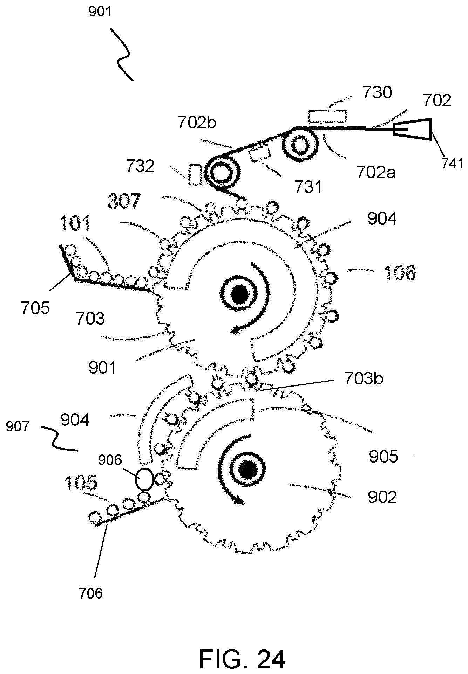

FIG. 24 illustrate an example apparatus 901 comprising system 700 for manufacturing a coated substrate. Apparatus 901 comprises system 700 described above incorporated into a rotating drum 901. More specifically, system 700 is positioned around the surface of rotating drum 901. Feed device 705, e.g. a vibrating feed device, feeds a plurality of substrate 101 each to a plurality of receptacles 703 positioned around the circumference of drum 901. Each of the plurality of receptacles 703 may receive a substrate 101 as it passes feed device 705. In the illustrated embodiment, drum 901 may be fitted with a vacuum box 904 to pull vacuum through the openings 722 in the receptacle 703. Cavity 703A (better shown in FIG. 18) and vacuum box 904 are connected through opening 722 and channel 712, through which vacuum suction may be pulled. Vacuum pressure may be adjusted according to the thickness of the polymer film to be applied to each substrate 101 and its pulling behavior under heat or plasticization of the polymer. As each receptacle 703 rotates past feed device 705, vacuum box 904 may suction a substrate 101 into the receptacle. Each receptacle 703 may be at a fixed distance from the each other on the peripheral surface of drum 901 and each receptacle 703 has a corresponding pedestal as shown in FIGs. 18-23. Vacuum pressure through channel 712 may hold substrate on the platform of pedestal 709 as coating layer 102 is applied to substrate 101.

Pedestal 709 is configured to translation along its longitudinal axis through opening 202 into cavity 703A of receptacle 703 to engage substrate 101. Pedestal 709 may raise substrate 301 a distance from receptacle 703 to permit a coating layer to be applied to substantially encapsulate substrate 101 and a portion of pedestal 709. Drum 901 may continuously rotate to move substrate 101 to receive polymer from coating apparatus 401 which is configured to apply coating layer 102 to receptacle 703 and substrate therein.

In an embodiment, coating layer 702 is passed under a first film surface treatment station 730 where a surface treatment is applied onto a first surface 702a of coating layer 702, thereafter coating layer 702 may pass a second surface treatment station 731 where a second surface treatment is applied onto a second surface 702b of coating layer 702, thereafter coating layer 702 may pass under a third film surface treatment station 732 where a further treatment may be applied. The film surface treatment stations are optional and there may be more or fewer surface treatment stations depending on the requirement(s) of coated substrate 105. The surface treatment stations may be coating station(s), heating station(s), and/or humidifying station(s).

Continuing the example above with respect to FIG. 24, coating layer 702 is vacuum formed to cover a substantial surface area of the substrate 101 and a portion of pedestal 709 creating precursor 200. Drum 901 may continue to rotate until receptacle 703 no longer communicates with vacuum box 904. Pedestal 709 may be withdrawn through opening 722 to disengage precursor 200 from pedestal 709. In an example, pedestal 709 is withdrawn when precursor 200 is above a receptacle 703b of drum 902 allowing precursor 200 to fall into one of a plurality of receptacles 703b positioned around the surface of drum 902. Drum 902 may comprise a vacuum box 905 to hold precursor 200 in a counterpart receptacle 703b with vacuum. A sealing system 907 may comprise heating device 904 configured to melt tail 103 of precursor 200 causing polymer of the tail 103 to fuse together and form sealing area 104. Sealing system 907 may also comprise roller 906 to laminate tail 103. Coated substrate 105 may then be rotated to a collection device 706 where receptacles 703b no longer communicates with vacuum box 905 allowing coated substrate 105 to disengage and transfer to collection device 706.

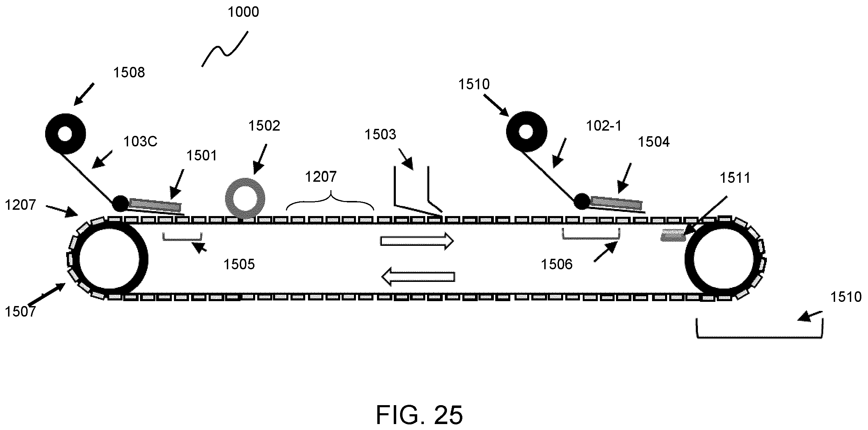

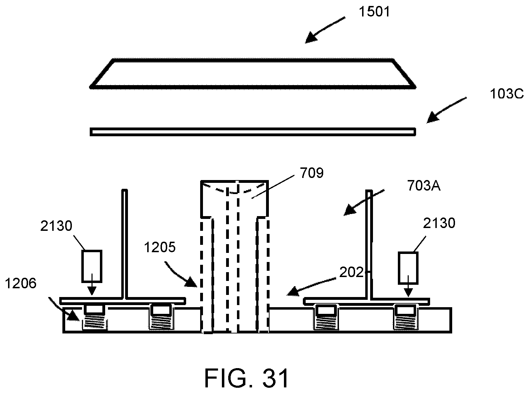

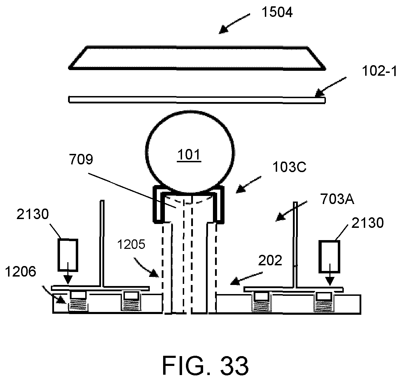

FIG. 25 illustrates illustrate an example apparatus 1000 comprising system 700 for manufacturing a coated substrate. Apparatus 1000 includes a double plate conveyor belt system 1507 comprising a cavity plate 1200b and platform plate 1200a which are described in detail below. Apparatus may also comprise a polymer film unwinder 1508 to fed polymer film for coating layer 102 to plate system 1207. Polymer film for coating layer 1 may pass under heating system 1501 to heat soften the film before application to receptacle 703 of plate system 1207. Vacuum suction may be provided to receptacle 703 of plate system 1207 through opening 1205 and channel 712 (shown in FIG. 26 and described below) by vacuum box 1505. Vacuum suction may pull coating layer 103C onto pedestal 709 as described below with reference to FIG. 31. Excess polymer around receptacle 703 may be collected from a surface of plate system 1207 by film collection unit 1502. Film collection unit may comprise a scrapper or weak vacuum source to collect residual film between receptacles 703. Feed device 1503, e.g. a vibrating feed device, feeds a plurality of substrate 101 to a plurality of receptacles 703 of plate system 1207 as described below with reference to FIG. 33. Feed device may comprise a plurality of channels, each aligned to a counterpart receptacle 703 to feed a substrate 101 to each receptacle 703. Unwinder 1508 may provide a polymer film for coating layer 102-1 to plate system 1207 as described below with reference to FIG. 33. The polymer film for coating layer 102-1 may pass under heating system 1504 to heat soften the film before application to substrate 101 and receptacle 703 of plate system 1207. Vacuum box 1506 may pull coating layer 102-1 around substrate 101 by vacuum pressure and a portion of pedestal 709 as described below with reference to FIG. 33-34 and form precursor 200B shown in FIG. 35. Sealing system 1511 may then heat shrink or seal overlapping tail 103 and coating layer 103C to form coating substrate 105B shown in FIG. 36. Coating substrate 105B may then be collected in collection system 510, e.g. container.

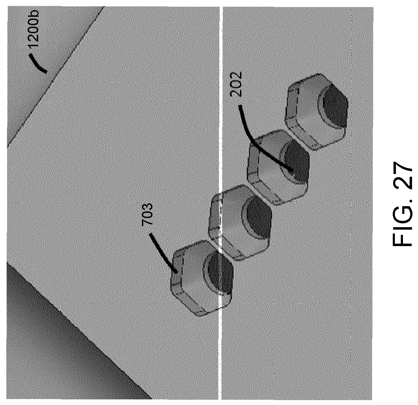

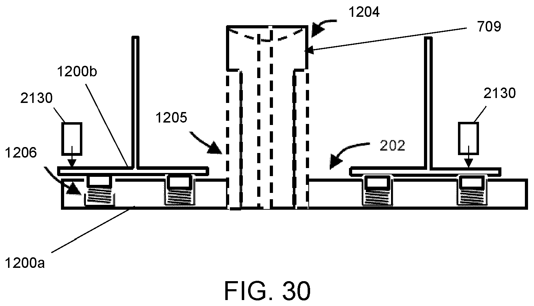

FIGs. 26 and 27 illustrate an example platform plate 1200a and cavity plate 1200b respectively. Cavity plate 1200b comprises a plurality of receptacles 703 which may be machined into plate 1200b e.g. by a CNC machining system. Platform plate 1200a may comprise pedestal 709 to engage a substrate 101. Pedestal 709 may comprise a platform 1204 on a top surface for engaging substrate 101. Platform 1204 on the top surface may comprise channel 712 through which vacuum pressure may be pulled. Platform 1204 may have a generally concave shaped to hold substrate 101. Pedestal 709 may also comprise one or more vacuum suction holes 1205 positioned around to a circumference of pedestal 709 to pull polymer films 102-1 and 103C toward pedestal 709 using vacuum pressure. In an example, a diameter of platform 1204 is less than or equal to a diameter of substrate 101. Platform plate 1200a is positioned below cavity plate 1200b having each pedestal 709 aligned with a corresponding opening 202 to allow pedestal 709 to translate through the opening between an extended position shown in FIGs. 30 and 31.

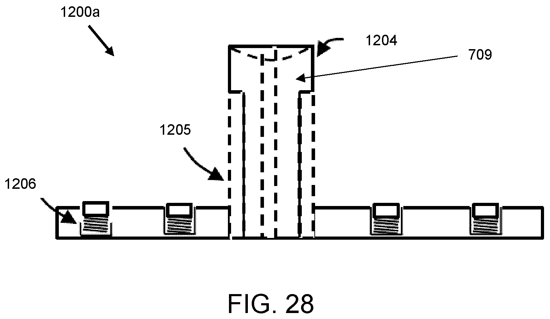

FIG. 28 illustrates a cross sectional view of example platform plate 1200a. Platform plate 1200a comprises at least one biasing member(s) 1206, e.g. a spring, to apply a biasing force against cavity plate 1200b. In an embodiment, biasing member(s) are a cushion spring to oriented perpendicular to plate 1200a. Vacuum suction holes 1205 are illustrated in dashed lines to show a flow path for vacuum pressure through plate 1200a. As shown, vacuum suction holes may extend along greater than 50% of a length of pedestal 709. In an embodiment, vacuum suction holes may extend substantially to platform 1204.

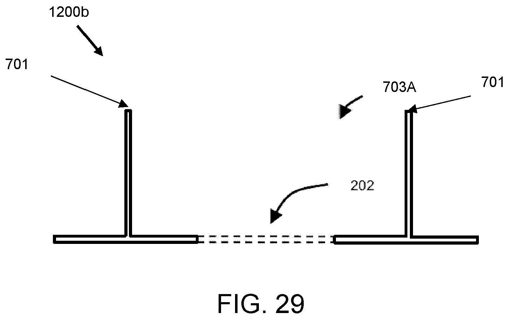

FIG. 29 illustrates a cross sectional view of example cavity plate 1200b. When cavity plate 1200b is positioned on top of platform plate 1200a, pedestal 709 may extend into cavity 703A through opening 202. Pedestal 709 is configured to translate along its longitudinal axis through opening 202 into cavity 703A of receptacle 703 to engage substrate 101. As described above, cavity 703A may be sized to receive substrate 101 and may have raised edge 701 at the periphery of receptacle 703 for receiving a coating layer. In the example shown in FIG. 20, substrate 101 may be received in receptacle 703 prior to application of a coating layer to receptacle 703. In another example, a coating layer may be provided to receptacle 703 and/or pedestal 709 prior to receiving substrate 101. As noted above, receptacle 703 may receive substrate 101 prior to extending pedestal 709 to cavity 703A or after pedestal 709 is extended into cavity 703A.

FIG. 30 illustrates a cross sectional view of example cavity plate 1200b positioned on platform plate 1200a. Cavity plate 1200b may sits on biasing member 1206 providing biasing force against cavity plate. Conveyor belt system 1507 may comprise an actuator 2130 to move cavity plate 1200b and platform plate 1200a toward or away from each other. Actuator 2130 may include a surface positioned to bias cavity plate 1200a toward platform plate 1200b overcoming the force of biasing member(s) 1206 as the conveyor belt system rotates cavity plate 1200b and platform plate 1200b into contact with the surface. Pedestal 709 extends through opening 202 into cavity 703A. Together plate system 1207 comprises cavity plate 1200b, platform plate 1200a, and pedestal 709. A plurality of overlapping cavity plate and platform plate (i.e. plate systems 1207) may be coupled to each other on a conveyor as shown in FIG. 25 to create continuous flat surface. Pedestal 709 may move along its longitudinal axis relate to cavity plate 1200b through opening 202 into its extended position when cavity plate 1200b moves toward platform plate 1200a against the biasing force applied by biasing member 1206. Pedestal 709 may move to its withdrawn position when biasing force applied by biasing member 1206 overcomes an opposing force applied to cavity plate 1200b.

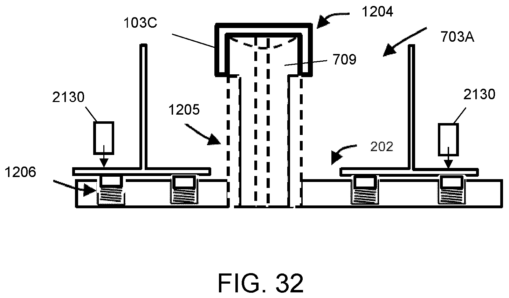

FIG. 31 illustrates a cross sectional view of example cavity plate 1200b positioned on platform plate 1200a shown in FIG. 30 being coated by a polymer film of coating layer 103C. Coating layer 103C may be applied onto pedestal 709 before substrate 101 is received by pedestal 709. Coating layer 103C comprises polymer film which may be heat softened by heating element 1501. Coating layer 103C may then be formed around pedestal 709, e.g. by vacuum suction through opening 1205 to pull heat softened coating layer 103C around pedestal 709 as shown in FIG. 32. In an another embodiment, coating layer 103C comprises a melt polymer on a roller that is applied onto pedestal 709 that when cooled forms a layer on pedestal 709. In another embodiment, coating layers 103C may comprise multiple coating layers by applying a polymer film ontop of a preceding polymer film layer to form a multilayer polymer firm. In an example, coating layer 103C comprises co-extruded polymer filrm or latex coated film.

FIG. 32 illustrates a cross sectional view of example cavity plate 1200b positioned on platform plate 1200a shown in FIG. 30 after it is partially coated by a coating layer. As shown, coating layer 103C may cover platform 1204 and comprise an excess portion 103C extends over a radial surface of pedestal 709.

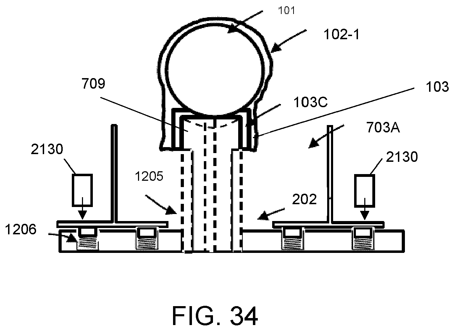

FIG. 33 illustrates a cross sectional view of example cavity plate 1200b positioned on platform plate 1200a shown in FIG. 30 after it is partially coated by a coating layer and has received a substrate. As shown, substrate 101 is received by pedestal 709, e.g. on platform 1204, which is previously coated by coating layer 103C. Coating layer 102-1 may be applied to substrate as according to this disclosure above. In an example, heating element 1504 may heat soften coating layer 102-1 for thermoforming to substrate 101 and pedestal 709. Surface temperature of coating layer 102-1 may be maintained between 50°C and 200 °C before applying to the substrate. Surface temperature of coating layer 102-1 should not damage substrate 101. As described above, coating layer 102-1 may comprise an excess amount of polymer film to overlapped pedestal 709. In the illustrated embodiment, coating layer 102-1 has a tail 103 which overlaps excess portion 103C extending over a radial surface of pedestal 709 as shown in FIG. 34.

FIG. 34 illustrates a cross sectional view of example cavity plate 1200b positioned on platform plate 1200a shown in FIG. 30 having a precursor 200B positioned on a pedestal. Pedestal 709 may be moved to its withdrawn position to dislodge precursor 200B from pedestal 709. As shown, substrate 101 is encapsulated by coating layers 102-1, 103C. After pedestal 709 is withdrawn, overlapping tail 103 and excess portion 103C may be sealed to the polymer coating 102-1 and/or substrate 101. In an example, a sealing system 1511 may heat melt overlapping tail 103 and excess portion 103C to fuse them together and form sealing area 104B shown in FIG. 36. As excess portion 103C and tail 103 are heat shrunk, coated substrate 105B is formed. Sealing system 1511 may also comprise a roller (not shown) to laminate tail 103 and excess portion 103C to coating layer 102-1.

FIG. 35 illustrates a precursor 200B to a coated substrate. Precursor 200B is similar to precursor illustrated in FIG. 2A and 2B; however, the tail comprises coating layer 103C including excess portion 103C. As shown in FIG. 35, substrate 101 of precursor 200B is encapsulated by polymer film. Example coated substrate 105B, illustrated in FIG. 36 may be formed by heat melting tail 103 of coating layer 102-1 and excess portion 103C to collapse and form reinforcing coating layer 108 coupled to sealing area 104B. As shown in FIG. 36 reinforcing coating layer 108 encapsulates a portion of substrate 101 and has edge coupled to coating layer 102-1 and sealing area 104B.

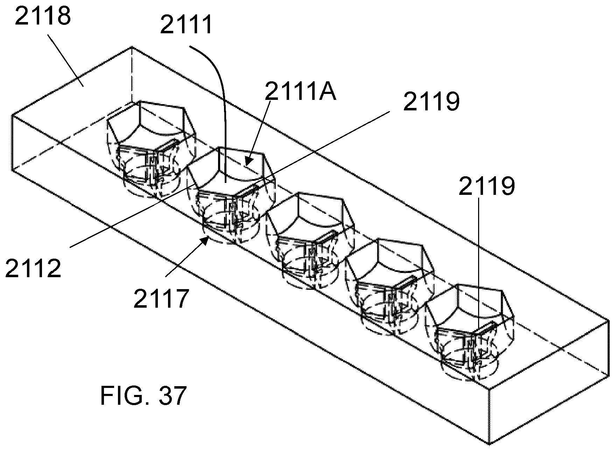

FIG. 37 illustrates an isometric view of an example cavity plate of a system 2000 for manufacturing a coated substrate described herein. Dashed lines illustrate edges hidden from view and solid lines illustrate visible edges. Example system 2000 is comprises similar features as examples systems 300 and 700 described above. System 2000 may comprise a feed device (now shown) configured to feed substrate 101 into receptacle 2111 having a counterpart pedestal 2121 (shown in FIG. 38). A plurality of receptacles 2111 may be provided on a surface of cavity plate 2118. Receptacle 2111 may define a cavity 2111A for receiving substrate 101. As shown in FIG. 37 receptacle 2111 may be provided in coating plate 2118. Receptacle 2111 may define an opening 2117 and each pedestal is movable relative to its counterpart receptacle 2111 through opening 2117, and each pedestal is configured to have an extended position in which the pedestal is extends into its counterpart receptacle to engage the substrate on the pedestal. Each pedestal 2121 has a withdrawn position in which it is withdrawn from cavity 2111A. In an example, the pedestal is configured to translate along its longitudinal axis through opening 2117 the counterpart receptacle without horizontal displacement to engage substrate 101 or disengage from substrate 101. Receptacle 2111 may have a edge 2112 at the periphery of receptacle 2111 for receiving a coating layer.

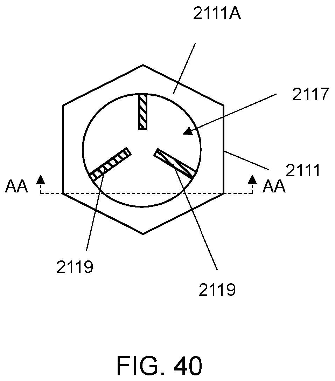

In an embodiment, receptacle 2111 comprises one or more disengagement member(s) 2119. Disengagement members 2119 may be secured to receptacle 2111 and define an volume between each member through which the members 2121B of pedestal 2121 translates. As shown in FIG. 40, 42, 43, disengagement members 2119 may overlap with opening 2117 through which pedestal members translate. When precursor 200 or 200B is positioned on pedestal 2121, and pedestal 2121 moves its withdrawn position, disengagement members 2119 push tail 103 of precursor 200, or overlapping tail 103 and excess portion 103C of precursor 200B, in a direction normal to the movement of pedestal 2121 which may disengage precurosor 200 or 200B from pedestal 2121.

In an embodiment, cavity plate 2118 having one or more receptacles 2111 may be formed having desired dimensions using industrial machining or milling tools such as Computer Numerical Control (CNC) or Vertical Machining Centers (VMC) machines. Dimensions of receptacles 2111 may be based on the dimension of the substrate that will be used for coating. In an example, a substrate of 3 mm diameter may be provided to a receptacle having a 6 mm diameter and 3mm depth.

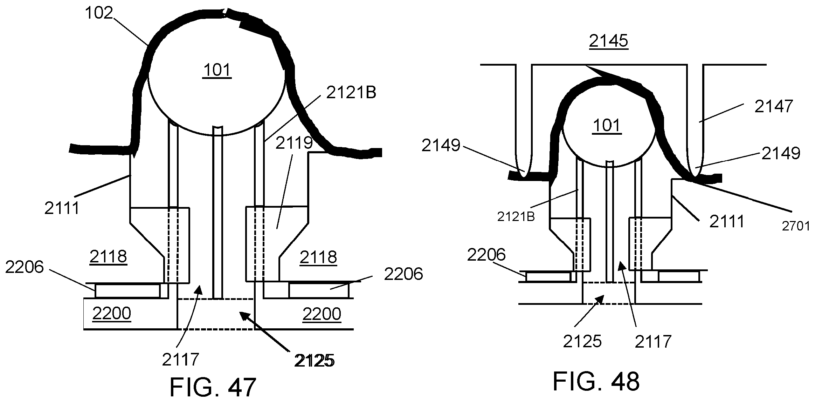

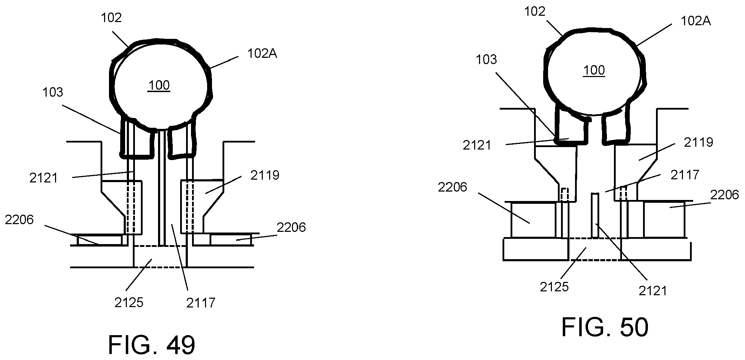

Continuing the example above, a substrate 101 may be provided to receptacle 2111. In an embodiment, a substrate may be provided to each receptacle 2111 illustrated in FIG. 37. Each substrate may be either pulled into the receptacle 2111 by vacuum pressure or by gravity. Thereafter a coating layer 200 comprising a polymer film may be applied over the substrate 101. The coating layer 200 is then passed under cutting tool 2145, e.g. a rotary die cutter, where the tip 2149 of the cutting blade 2147 cuts the film 200 around the edge of the cavity 111 (shown in Figure 48) to provide a coating layer sufficient to encapsulate an entire surface of substrate 101. Coating layer 200 may be pulled onto the surface of the substrate 101 and around substrate 101 by vacuum suction through the opening 2117 in the receptacle 2111. The vacuum-pull coats a substantial surface area of the substrate 101 with the coating layer 200 and also wraps around a portion of pedestal 2121 on which the substrate 101 is positioned creating an excess film or tail 1202 (illustrated in FIG. 49), i.e. precursor 200. Coated substrate 100 with tail 1202 is then disengaged from the pedestal 2121 by withdrawing pedestal 2121 from receptacle 2111.

FIG. 38 illustrates an isometric view of an example platform plate 2200 of system 2000. As shown, platform plate 2200 comprises one or more pedestal 2121 comprises a plurality of members 2121B each having a surface defining a plane XYZ to form a platform 2121A for receiving substrate 101. In an embodiment, the surfaces for receiving substrate 101 of each member 2121B may be concave. Each member 2121B may be positioned parallel an in a triangular pattern when viewed from above. In an embodiment, members 2121B of pedestal 2121 are spaced apart from disengagement members 2119 when viewed along the longitudinal axis of members 2121B. As shown, each member 2121B is illustrated a pin. While a triangular pattern is shown, many other patterns may be used, e.g. quadrilateral pattern, hexagonal pattern. Pedestal 2121, and members 2121B thereof forming platform 2121A, may be positioned generally within opening 2117. Pedestal 2121 and platform 2121A may move along a longitudinal axis of pedestal 2121 through opening 2117 of the cavity. In an embodiment, members 2121B of pedestal 2121 may move between and/or past disengagement members 2119. The movement of pedestal 2121 may be controlled by a controller, which may control the relative position of pedestal 2121 relative to receptacle 2111 using e.g. an actuator 2130. In an example, pedestal 2121 is positioned on platform plate 2200 which is positioned beneath cavity plate 2118 allowing one or more pedestal 2121 to translate through a counterpart opening 2117 of cavity plate 2118. When cavity plate 2118 and platform plate 2200 move relative to reach other, each pedestal 2121 may simultaneously move into in the pedestal's extended position in receptacle 2111 when cavity plate 2118 and platform plate 2200 move toward each other or simultaneously move into its withdrawn position when cavity plate 2118 and platform plate 2200 move away from each other. Platform plate 2200 may define vacuum openings 2125 generally positioned in a center of members 2121B, each opening 2125 configured to provide vacuum pressure from a vacuum pressure source to receptacle 2111.

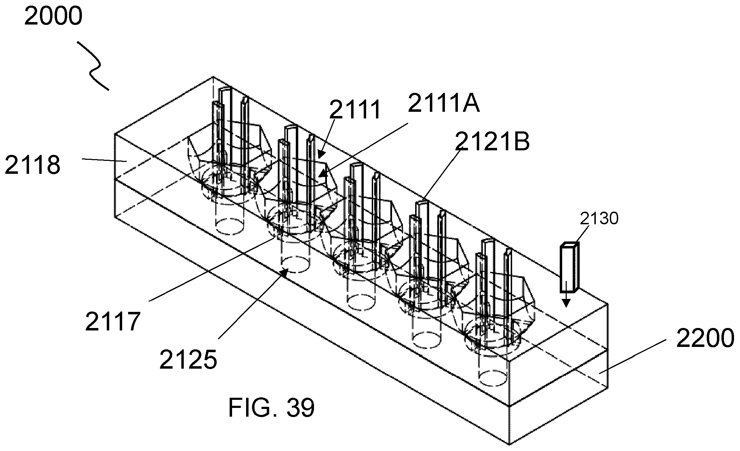

FIG. 39 illustrates an isometric view of cavity plate 2118 overlapping with platform plate 2200. Pedestal 2121 is in an extended position for receiving substrate 101. Each member 2121 of pedestal 2121 is position between disengagement members 2119. Cavity plate 2118 may be moved relative to platform plate 2200 by any means, e.g. an actuator 2130, biasing members 2206. Actuator 2130 may include conveyor belt system (e.g. system 1507), having a surface positioned to bias cavity plate 2118 toward platform plate 2200 overcoming the force of biasing member(s) 2206 as the conveyor belt system rotates cavity plate 2118 and platform plate into contact with the surface. Pedestal 2121 extends through opening 2117 into cavity 2111A. Pedestal 2121 may move along its longitudinal axis relative to cavity plate 2118 through opening 2117 into its extended position when cavity, e.g. when plate 2118 moves toward platform plate 2200. Pedestal 2121 may move to its withdrawn position when pedestal 2121 is withdrawn through opening 2117, e.g. when cavity plate 2118 move away from platform plate 2200 or vice versa.

FIG. 40 is an overhead view of an example receptacle and disengagement members according to this disclosure. As shown, receptacle 2111 defines opening 2117 through which pedestal 2121 may translate. Disengagement members 2119, e.g. three as shown in FIG. 40, are arranged to overlap with opening 2117. Disengagement members made be made of metal, plastic, rubber of any other suitable material. In an embodiment, disengagement member is a rubber material configured to operate a high temperatures, e.g. silicon rubber.

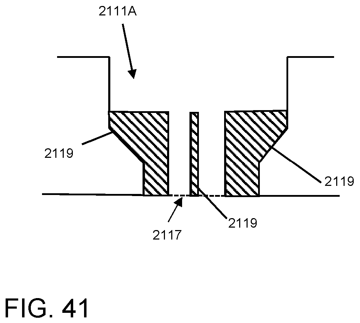

FIG. 41 illustrates a cross-sectional view of the example receptacle and pedestal along the line AA-AA in FIG. 40. Disengagement members 2121B comprise surfaces to engage tail 103 of precursor 200 or overlapping tail 103 and excess portion 103C of precursor 200B, applying a normal force as predestal 2121 is moved to its withdrawn position causing precursor 200 or 200B to disengage from pedestal 2121.

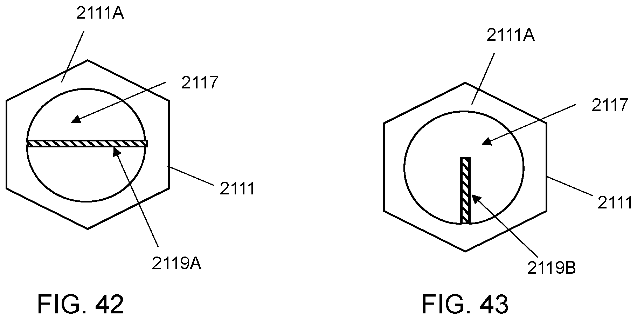

FIG. 42 illustrates an overhead view of another example receptacle and disengagement members according to this disclosure. As shown, receptacle 2111 defines opening 2117 through which pedestal 2121 may translate. Disengagement member 2119A is arranged to overlap and extend across a diameter of opening 2117

FIG. 43 illustrates another example receptacles and pedestal according to this disclosure. As shown, receptacle 2111 defines opening 2117 through which pedestal 2121 may translate. Disengagement member 2119B is arranged to overlap and extend across a portion of opening 2117.

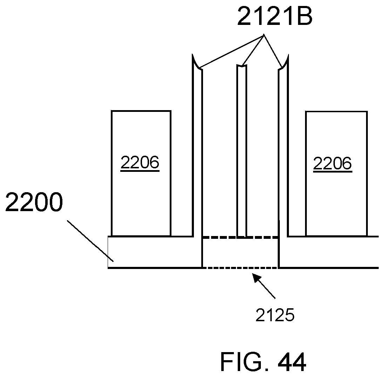

FIG. 44 illustrates a cross-sectional view of the platform plate 2200 of FIG. 38 having members 2121B of pedestal 2121 positioned around opening 2125 which is defined by plate 2200. Biasing members 2206, e.g. springs, may apply a biasing force to cavity plate 2118 to move pedestal 2121 into withdrawn position.

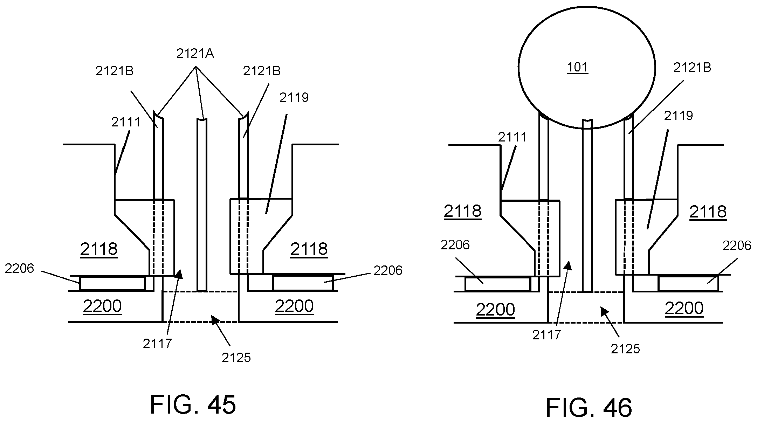

FIG. 45 illustrates a cross-sectional view of a portion of cavity plate 2118 overlapping platform plate 2200 shown in FIG. 39. Pedestal members 2121B of pedestal 2121 are in an extended position where members 2121B extend through opening 2117 and between disengagement members 2119 to receive substrate 101 on platform 2121A as shown in FIG. 46. Biasing members 2206 may be in a first position in which a biasing force of biasing members 2206 is less than a force compressing platform plate 2200 and cavity plate 2118 together. Openings 2117 and 2125 may be aligned to allow a vacuum pressure source (not shown) to pull vacuum through the aligned openings.

FIG. 47 illustrates a cross-sectional view of a portion of cavity plate 2118 overlapping platform plate 2200 shown in FIG. 39 having a substrate 101 provided on a pedestal 2121 coated with a coating layer 102. Coating layer 102 may be applied to substrate 101 by a coating apparatus, e.g. a polymer film extruder, as described herein.

FIG. 48 illustrates a cross-sectional view of a portion of cavity plate 2118 overlapping platform plate 2200 shown in FIG. 45 and 47 having a substrate 101 provided on pedestal 2121 which is coated with a coating layer 102, and a cutting tool 2145. Cutting tool 2145 may be a rotary die cutting tool configured to cut a desired shape out of coating layer 102. In an example, cutting tool 2145 may have a dimension matching a perimeter of receptacle 2111. Receptacle may have a surface 2701 at the periphery of receptacle 2111 for receiving coating layer 102. Cutting tool 2145 may be part of a conveyor belt system or roller where tip 2149 of a cutting blade 2147 may is positioned to cut coating layer 102 at surface 2701 of receptacle 2111. Cutting tool 2145 is illustrated as cutting coating layer 102 at opposing sides of receptacle 2111; however, cutting tool 2145 will cut coating layer 102 at or adjacent to the perimeter of receptacle 2111 on surface 2701. Tip 2149 may press coating layer 102 against surface 2701 and to cut a shape out of coating layer 200 to match a shape of the receptacle 2111. Vacuum suction through openings 2117 and 2125 may pull the coating layer 200 around substrate 101 wrapping substrate 100 and a portion of members 2121B of pedestal 2121. In an embodiment, cutting tool 2145 has grid of cutting blades matching shape of each receptacle 2111 which are arranged in a grid like pattern. In an example, a hexagonally shaped receptacle 2111 of plate 2118 may have a hexagonal position of blades on a surface of cutting tool 2145, e.g. on the surface of a rotary die cutter, where the tip 2149 faces surface 2701 of receptacle 2111.

FIG. 49 illustrates a cross-sectional view of a portion of cavity plate 2118 overlapping platform plate 2200 shown in FIG. 45 and 48 having precursor 200 provided on pedestal 2121. As describe herein, precursor 200 may be formed on pedestal 2121 by vacuum suction of coating layer 102 around substrate 101 and a portion of pedestal 2121. Tail 103 of precursor 200 is engaged with pedestal 200 around a portion of the perimeter of pedestal 2121. Precursor 200 may be disengagement from pedestal 2121 by moving pedestal from the extended to withdrawn position.

FIG. 50 illustrates a cross-sectional view of a portion of cavity plate 2118 overlapping platform plate 2200 shown in FIG. 47 having precursor 200 disengaged from pedestal 2121. Precursor 200 may disengage from pedestal 2121 by moving pedestal 2121 from its extended position to its withdrawn position shown in FIG. 50. As pedestal 2121 translates through opening 2117 between disengagement members 2119, precursor 200 moves toward disengagement member 2119 along the longitudinal axis of of pedestal 2121. When tail 103 abuts disengagement member 2119, precursor 200 may disengage from pedestal 200 as pedestal 2121 moves through opening 2117. Disengagement member 2119 may collapse at least a portion of tail 103. Once disengages from pedestal 2121, tail 103 of precursor 200 may be heat melted to form sealing area 104 and create coated substrate 105.

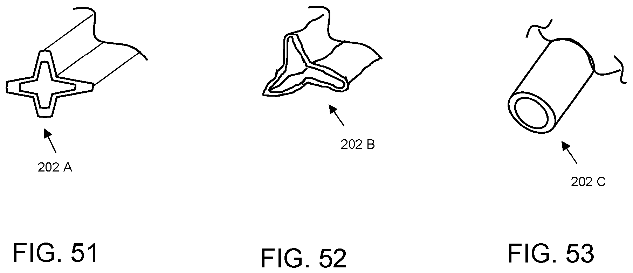

FIG. 51 is a perspective cut away view of an example tail of precursor 200 shown in FIG. 2A. As described herein, example tail 202A is a continuous extension of coating layer 102 and may extend away from the surface of substrate 101 at any angle, e.g. generally perpendicular to the surface of substrate 101. Tail 202A has an generally cross shaped cross section which may be formed by a 4-member pedestal by positioning four members 2121B at four vertices of the four right angles formed by the four arms of the cross shape. The system and methods described herein with respect to FIGs. 37-50 may then be used to create a precursor 200 having tail 202A.

FIG. 52 is a perspective cut away view of an example tail of precursor 200 shown in FIG. 2A. As described herein, example tail 202B is a continuous extension of coating layer 102 and may extend away from the surface of substrate 101 at any angle, e.g. generally perpendicular to the surface of substrate 101. Tail 202B has an generally triangular shaped cross section which may be formed by a 3-member pedestal by orienting three members 2121B at three vertices of a triangle. The system and methods described herein with respect to FIGs. 37-50 may then be used to create a precursor 200 having tail 202B.

FIG. 53 is a perspective cut away view of an example tail of precursor 200 shown in FIG. 2A. As described herein, example tail 202C is a continuous extension of coating layer 102 and may extend away from the surface of substrate 101 at any angle, e.g. generally perpendicular to the surface of substrate 101. Tail 202C has an generally cylindrical shaped cross section which may be formed by orienting a plurality of members 2121B in a circular pattern. In another example, a single membered pedestal may be used. The system and methods described herein with respect to FIGs. 37-50 may then be used to create a precursor 200 having tail 202B.

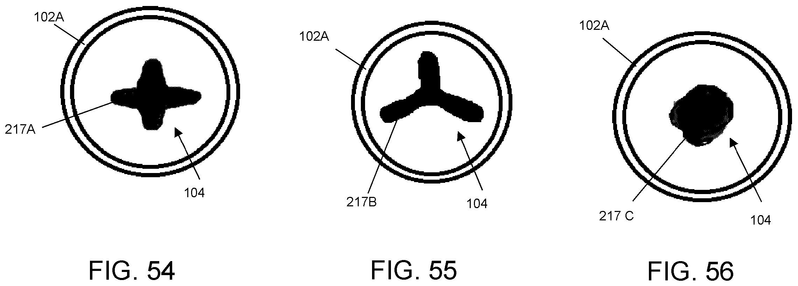

FIG. 54 is an fragmentary view of an example sealing area of coated substrate shown in FIG. 1. As shown, in an example sealing area 104 may have a generally cross-shape sealing spot 217A. Cross-shaped sealing spot 217A may be formed when external heat is applied to tail 202A shown in FIG. 51 so that it is melt fused.

FIG. 55 is an fragmentary view of an example sealing area of coated substrate shown in FIG. 1. As shown, in an example sealing area 104 may have a generally Y-shape sealing spot 217B. Y-shape sealing spot 217B may be formed when external heat is applied to tail 202B shown in FIG. 52 so that it is melt fused.

FIG. 56 is an fragmentary view of an example sealing area of coated substrate shown in FIG. 1. As shown, in an example sealing area 104 may have a generally circular-shaped sealing spot 217C. Circular-shaped sealing spot 217C may be formed when external heat is applied to tail 202C shown in FIG. 53 so that it is melt fused.

Sealing spots 217 A, 217B, and 217C may have distinct properties from portion 102A of coating layer 102 and may have a higher density and/or a greater coating thickness than primary portion 102A of coated substrate 105. Sealing spot may appear as a single distinct area from primary portion 102A on the surface of coated substrate 105 and appears on only one hemisphere of coated substrate 105. Under microscope sealing spot may appear as as a distinct bump in comparison to a relatively smoother coating layer of primary portion 102A.

Multiple coating layers 102 may be applied to a single substrate by repeating the methods described herein. If multiple coating layers are applied to the same substrate, a coated substrate will have same number of sealing areas as the number of coating applications.

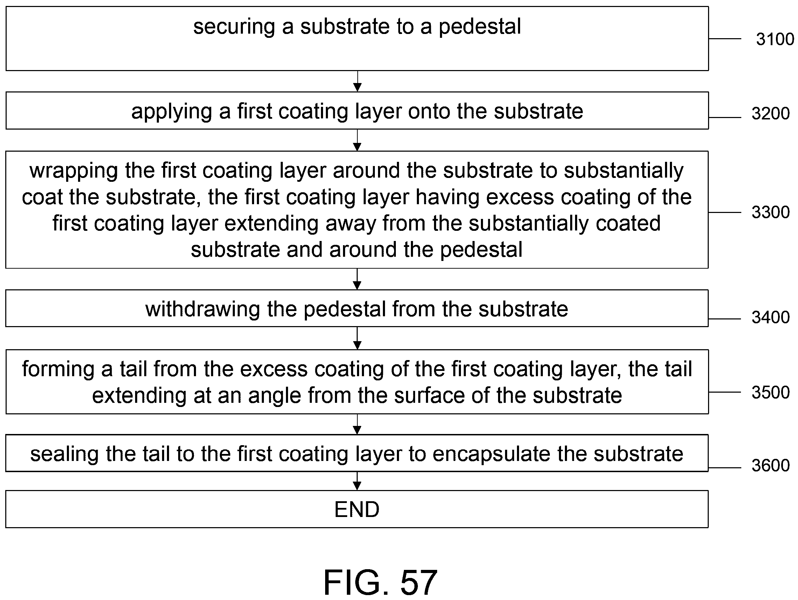

With reference to the method flow chart of FIG. 57, some embodiments may provide for a method of manufacturing a coated substrate.

At 3100, a substrate may be secured to a pedestal. The substrate may be fed to a receptacle defining a cavity and an opening through which the pedestal extends. The pedestal may be extended into the cavity to couple with the substrate, where the pedestal translates along its longitudinal axis without horizontal displacement. The substrate may be a solid core. In another example, the substrate may be a fertilizer, a pesticide, a fertilizer-pesticide combination product, a pharmaceutical tablet, a nutraceutical tablet, an agriculture seed, a solid food article, or a water soluble solid core. In an embodiment, the pedestal comprises a channel configured to provide vacuum suction to secure the substrate to the pedestal. In another embodiment, the pedestal may be a pin which may be heated. The pin may be heated to a temperature greater than the melting point of the substrate; and the substrate is secured to the pin by contacting the pin to the substrate to embed a portion of the pin into the substrate.

At 3200, a first coating layer may be applied onto the substrate. In an embodiment, before securing the substrate to the pedestal, a second coating layer may be applied onto the pedestal to partially coat the pedestal; and delivering the substrate to the partially coated pedestal. The second coating layer may be heated to thermoform the second coating layer around the pedestal. In another embodiment, the edges of the first coating layer may be applied onto a lateral surface at the periphery the cavity; and breaking the edges of the first coating layer off the lateral portions of the cavity.

At 3300, the first coating layer may be wrapped around the substrate to substantially coat the substrate, the first coating layer having excess coating of the first coating layer extending away from the substantially coated substrate and around the pedestal. In an embodiment, the first coating layer may be wrapped around the substrate comprises suction pulling the first coating layer around the substrate. In another embodiment, wrapping the first coating layer around the substrate comprises blowing air along a periphery of the first coating layer. In another embodiment, an adhesive may be applied onto the pedestal that transfers the adhesive to first coating layer or the second coating layer partially coating the pedestal. When sealed, the excess coating of the first coating layer with adhesive may be pressed onto itself and the adhesive bonds the excess coating to the substrate.

At 3400, the pedestal may be withdrawn from the substrate.

At 3500, a tail may be formed from the excess coating of the first coating layer, the tail extending at an angle from the surface of the substrate. In an embodiment, the tail is formed from the excess coating of the first coating layer and a portion of the second coating layer.

At 3600, the tail may be sealed to the first coating layer to encapsulate the substrate. In an embodiment, the tail may be melted and laminated to the first coating layer.

### Additional Non-Limiting Example Materials

Non-limiting example seeds as substrate 101 may include the seed of various cultivated plants that can be classified as either monocots or dicots. Cultivated plants include but are not limited to, for example, cereals such as wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, oil seed rape / canola, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers, preferably corn, sunflower, cereals such as wheat, rye, barley, triticale, oats or rice, soybean, cotton, oil seed rape / canola more preferably corn, sunflower, soybean, cereals such as wheat, rye, barley, triticale, oats or rice.

Non-limiting example fertilizer as substrate 101 may include fertilizer ingredients such as nitrogen, phosphorous, potassium, silicon, magnesium, calcium, manganese, boron, iron and so on, for supplying nutrients to cultivating crops. Typical examples thereof include nitrogen fertilizer such as urea, ammonium nitrate, ammonium magnesium nitrate, ammonium chloride, ammonium sulfate, ammonium phosphate, sodium nitrate, calcium nitrate, potassium nitrate, lime nitrogen, urea-form (UF), crotonylidene diurea (CDU), isobutylidene diurea (IBDU), guanylurea (GU); phosphate fertilizer such as calcium superphosphate, cone superphosphate, fused phosphate, humic acid phosphorus fertilizer, calcined phosphate, calcined cone phosphate, magnesium superphosphate, ammonium polyphosphate, potassium metaphosphate, calcium metaphosphate, magnesium phosphate, ammonium sulfate phosphate, ammonium potassium nitrate phosphate and ammonium chloride phosphate; potash fertilizer such as potassium chloride, potassium sulfate, potassium sodium sulfate, potassium sulfate magnesia, potassium bicarbonate and potassium phosphate; silicate fertilizer such as calcium silicate; magnesium fertilizer such as magnesium sulfate and magnesium chloride; calcium fertilizer such as calcium oxide, calcium hydroxide and calcium carbonate; manganese fertilizer such as manganese sulfate, manganese sulfate magnesia and manganese slag; boron fertilizer such as boric acid and borates; and iron fertilizer.

Non-limiting example polymer film may include commercial grades polymers for use in pharmaceutical manufacturing such as non-enteric polymers: Hypromellose, Hydroxyethyl cellulose, Hydroxyethylmethyl cellulose, Carboxymethylcellulose sodium, Hydroxypropyl cellulose, Polyethylene glycol, Ethyl cellulose. Polymers for enteric coating may include Hypromellose phthalate, Polyvinyl acetate phthalate, Cellulose acetate phthalate, Polymethacrylates, Shellac.

Polymer film with PGAs dispersed in the matrix may be used. The polymer film may release PGAs via by degradation of the film or by leaching out of the PGAs from the film matrix upon contact with liquid medium or water. The rate of release of PGAs are controlled by the rate of biodegradation and rate of leaching out of the PGAs form the matrix of the polymer film. Polymer films with different rate of biodegradation may have different PGAs release rates, the water solubility or the PGAs and miscibility of PGAs with the polymer also affect the rate of release of PGAs from the film matrix. In some embodiments the PGAs are applied along with the surfactants that promote the release of PGAs from the film matrix.

Non-limiting example PGAs for the coating layer include fungicidal agents, bactericidal agents, insecticidal agents, nematicidal agents, disinfectants, microorganisms, microbial inoculant, rodent killers, weed killers, attracting agents, repellent agents, plant growth regulators, nutrients, plant hormones, minerals, plant extracts, acaricides or miticides, molluscicides, germination stimulants, pheromones, biological preparations, biological agents, etc.

Other non-limiting example PGAs for the coating layer are commercially available flowable concentrates. Flor concentrates may be spray coated/roll coated onto the surface of the polymer film. Non-limiting example of the flowable concentrate available commercially are; Imidacloprid-48%FS (also available as Gaucho^{®} from Bayer), Thiomethoxam-30%FS, Thiram-40%FS, Thiophanate methyl + Pyroclostribin 50%FS. There are numerous flowable concentrates available commercially from suppliers and custom formulators and a customized formulation can may also be prepared by blending different compatible concentrates in ratios appropriate for correct loading level of active ingredients onto the seed. Emulsion seed (ES) treatments are available commercially as oil-in-water emulsion of the plant growth agents (PGAs). These PGAs can also be applied either spray or roll coating onto the surface of the film. One example of a commercially available ES is Metalaxyl-M-31.8%ES. There are numerous ES treatments commercially available with different PGAs for seed application, these can be used for coating onto the film surface. In an embodiment, the PGAs is in liquid form with a coating polymer. The plant enhancing agent may be dispersed in polymer solution or solubilized in polymer solution or both. The solid contents of the solution may be between 1% w/v to 60% w/v. The solution may be converted to a polymer film using any commercial means. Polymer and PGA in solution may have higher evaporation temperatures when temperature sensitive PGAs are not required in a polymer film. Lower evaporation temperature solutions may be used when temperature sensitive PGAs are required the polymer solution and temperature may be adjusted to minimize or avoid temperature induced degradation or death of an active ingredient.

In an embodiment, a polymer film used in the methods, systems, and coated substrate herein may be manufactured with PGAs dispersed into the structure of the film. The amount of PGAs may be between 1% - 50% of the weight of dry film. Temperature sensitive PGAs may be blended in low melting point polymers such as Polycaprolactone (available under brand name CAPA series melt extrusion grade resins). The PGAs filled film may be extrusion coated onto a PVOH film creating a double layer film or thermally laminated onto the PVOH film. PGEA is Plant Growth Enhancing Agent, the term used herein for an individual agent or a mixture of different agents.

In an embodiment, a polymer film used in the methods, systems, and coated substrate herein may be manufactured with PGAs dispersed into the structure of the film. The amount of PGAs may be between 1% - 50% of the weight of dry film. Temperature sensitive PGAs may be blended in low melting point polymers such as Polycaprolactone (available under brand name CAPA series melt extrusion grade resins). The PGAs filled film may be extrusion coated onto the seed surface or thermally laminated at low enough temperature not to damage the seed. The PGAs filled film covers the seed surface between 10% to 90% of the surface area of the seed, preferably between 30% to 70% of the surface area of the seed, more preferably between 60% to 70% of the surface area of the seed. PGAs are released through the structure of the film in slow release manner as the film degrades or through leaching out from the film.

Polymer film comprising a water-soluble film may contains PGAs and can be prepared by the known solvent casting method, where a polymer solution or aqueous dispersion is poured over a smooth metallic surface and the water or the solvent is evaporated leaving behind a smooth thin film. The method of manufacturing water soluble films by casting is well known process in the water-soluble film manufacturing industry. The solvent cast film may be prepared by using a commercially available slot die coating process (Slot Die Coating equipment are available from Nordson Inc.).

Other non-limiting example PGAs for the coating layer includes a dry mixture comprising different PGAs.

In an embodiment, a polymer film used in the methods, systems, and coated substrate herein may comprise a coating composition comprising a dry mixture in particulate form, the individual components are blended in a dry mixture wherein the individual components are in powdered from or in form of complex particles comprising more than one component. The dry coating composition may be applied to the surface of the film via electrostatic powder coating method

Micro-capsule suspension of PGAs for seed treatment such as FORCE ST from SYNGENTA may also be applied as a coating to the film surface. Dry powder or Wettable powder (WP) of PGAs for seed treatments are also available commercially. The WP may be either dry coated onto the surface of the film or embedded into the structure of the film onto the one side of the film. Non-limiting examples are; Carbendazim-25%DS, Tebuconazole-2.5%DS, Carbosulfan-25%DS, Carboxin-37.5 + Thiram-37.5% DS.

A coating layer according to this disclosure may also include a suitable fungicide. Non-limiting example of suitable fungicides can include, for example, strobilurin fungicides, azole fungicides, conazole fungicides, triazole fungicides, amide fungicides, benzothiadiazole fungicides or a combination thereof. In other embodiments, the fungicides can include, azoxystrobin, metominostrobin, orysastrobin, paclobutrazol, acibenzolar-S-methyl, chlorothalonil, mandipropamid, thiabendazole, chlorothalonil, triadimenol, cyprodinil, penconazole, boscalid, bixafen, fluopyram, fenpropidin, fluxapyroxad, penflufen, fluoxastrobin, benthiavalicarb, benthiavalicarb-isopropyl, dimethomorph, flusulfamide, methyl thiophanate, triticonazole, flutriafol, thiram, carboxin, carbendazim or a combination thereof. Typical fungicidal agents include; Captan (N-trichloromethyl)thio-4-cyclohexane-1,2-dicarboximide), Thiram (tetramethylthioperoxydicarbonic diamide; commercially available under the tradename Proseed), Metalaxyl (methyl N-(2,6-dimethylphenyl)-N-(methoxyacetyl)-DL-alaninate), Fludioxonil (4-(2,2-difluoro-1,3-benzodioxol-4-yl)-1-H-pyrrol-3-carbonitril; commercially available in a blend with mefonoxam under the tradename Maxim XL), difenoconazole (commercially available under the tradename Dividend 3FS), carbendazim iprodione (commercially available under the tradename Rovral^{®}), ipconazole, mefonoxam (commercially available under the tradename Apron XL), tebuconazole, carboxin, thiabendazole, azoxystrobin, prochloraz, and Oxadixyl (N-(2,6-dimethylphenyl)-2-methoxy-N-(2-oxo-3-oxazolidinyl) acetamide). The fungicide can be included in the seed coating composition of the present disclosure in an amount of 0.0001-10 wt. %, based on the total weight of the coated seeds.

A coating layer according to this disclosure may also include a suitable nematicides. Non-limiting example nematicides can include avermectin nematicides, carbamate nematicides, and organophosphorous nematicides, benomyl, benclothiaz, and a combination thereof. Nematicides also include nematicidally active biological organisms such as a bacteria or fungus. For example, Bacillus firmus, Bacillus cereus, Bacillus spp, Pasteuha spp, Pochonia chlamydosporia, Pochonia spp, and Streptomyces spp. An example of ready to use formulation of a nematicide AVICTA^{®} from Syngenta.

A coating layer according to this disclosure may also include a suitable insecticidal agents. Non-limiting example insecticidal agents include pyrethroids, organophosphates, caramoyloximes, pyrazoles, amidines, halogenated hydrocarbons, neonicotinoids, and carbamates and derivatives thereof. Particularly suitable classes of insecticides include organophosphates, phenylpyrazoles and pyrethoids. Preferred insecticides are those known as terbufos, chlorpyrifos, fipronil, chlorethoxyfos, tefluthrin, carbofuran, imidacloprid, and tebupirimfos. Commercially available insecticides include imidacloprid (commercially available under the tradename Gaucho^{®}), and clothianidin (commercially available from Bayer under the tradename Poncho^{®}), thiometoxam (commercially available from Syngenta under the tradename Cruiser^{®}) and fipronil (commercially available from BASF under the tradename Regent^{®}). The insecticide can be included in the seed coating composition of the present disclosure in an amount of 0.001%-10 wt. %, based on the total weight of the coated seeds.

Mixtures of insecticides and fungicides as PGAs in coating composition may also be utilized in the present disclosure. Some examples of mixtures of agents are; clothianidin / metconazole; Neonicotinoids / ethaboxam; Neonicotinoids / 2-[2-(2,5-dimethylphenoxymethyl)phenyl]-2-methoxy-N-methylacetamide; Neonicotinoids / tolclofos-methyl; metconazole / ethaboxam; 8 metconazole / 2-[2-(2,5-dimethylphenoxymethyl)phenyl]-2-methoxy-N-methylacetamide; ethaboxam / 2-[2-(2,5-dim ethylphenoxymethyl)phenyl]-2-methoxy-N-m ethylacetamide; ethaboxam / tolclofos-methyl; 2-[2-(2,5-dimethylphenoxymethyl)phenyl]-2-methoxy-N-methylacetamide /tolclofos-m ethyl; 2-[2-(2,5-dimethylphenoxymethyl)phenyl]-2-methoxy-N-methylacetamide / metalaxyl; 2-[2-(2,5-dimethylphenoxymethyl)phenyl]-2-methoxy-N-methylacetamide / mefenoxam; and 2-[2-(2,5-dimethylphenoxymethyl)phenyl]-2-methoxy-N-methylacetamide / ipconazole.

A coating layer according to this disclosure may also include a herbicide as a PGA. Non-limiting example herbicides include aryloxycarboxylic acid, aryloxyphenoxypropionates, cyclohexanedione oximes, hydroxybenzonitriles, sulphonylureas, triazolopyrimidines, triketiones, triazine herbicides such as metribuzin, hexaxinone, or atrazine; sulphonylurea herbicides such as chlorsulfuron; uracils such as lenacil, bromacil, or terbacil; urea herbicides such as linuron, diuron, siduron, or neburon; acetanilide herbicides such as alachlor, or metolachlor; thiocarbamate herbicides such as benthiocarb, triallate; oxadiazolone herbicides such as oxadiazon; isoxazolidone herbicides, phenoxyacetic acids; diphenyl ether herbicides such as fluazifop, acifluorfen, bifenox, or oxyfluorfen; dinitro aniline herbicides such as trifluralin; organophosphonate herbicides such as glufosinate salts and esters and glyphosate salts and esters; and/or dihalobenzonitrile herbicides such as bromoxynil, or ioxynil, benzoic acid herbicides, dipyridilium herbicides such as paraquat; and other herbicides such as clomazone, carfentrazone, saflufenacil, and pyroxasulphone.

A coating layer according to this disclosure may also include a plant growth regulator. Non-limiting example plant growth regulators include potassium azide, 2-amino-4-chloro-6-methyl pyrimidine, N-(3,5- diclhorophenyl) succinimide, 3-amino-1 ,2,4-triazole, 2-chloro-6-(trichloromethyl)pyridine, sulfathiazole, dicyandiamide, thiourea, guanylthiourea or a combination thereof.

A coating layer according to this disclosure may also include a microorganism. Non-limiting example microorganisms include any bacteria, fungi or viruses having any beneficial effect(s) in agriculture, such as the control of weeds, pests or diseases, or an improvement in plant growth, emergence or yield. Some non-limiting examples of bacteria that may be used include members of the genera Pseudomonas (e.g., P.fluorescein and others), Bradyrhizohium (e.g., B japanicum and others), Serratia, Arthrobacter, Azospirillum, Rhizobiurn and Bacillus.

### Alternate embodiments

The above description is meant to be exemplary only, and one skilled in the relevant arts will recognize that changes may be made to the embodiments described without departing from the scope of the invention disclosed.
The invention is defined according ot the appended claims.

## Claims

1. A method of manufacturing a coated substrate, the method comprising:
securing a substrate to a pedestal;
applying a first coating layer onto the substrate;
wrapping the first coating layer around the substrate to substantially coat the substrate, the first coating layer having excess coating of the first coating layer extending away from the substantially coated substrate and around the pedestal;
withdrawing the pedestal from the substrate;
forming a tail from the excess coating of the first coating layer, the tail extending at an angle from the surface of the substrate; and
sealing the tail to the first coating layer to encapsulate the substrate.

2. The method of claim 1 further comprising:
before securing the substrate to the pedestal, applying a second coating layer onto the pedestal to partially coat the pedestal; and
delivering the substrate to the partially coated pedestal.

3. The method of claim 2, comprising heating the second coating layer to thermoform the second coating layer around the pedestal.

4. The method of claim 2 or 3, wherein the tail is formed from the excess coating of the first coating layer and a portion of the second coating layer.

5. The method of any one of claims 1-4, further comprising melting the tail and laminating the melted tail to the first coating layer.

6. The method of any one of claims 1-5, wherein the substrate is a fertilizer, a pesticide, a fertilizer-pesticide combination product, a pharmaceutical tablet, a nutraceutical tablet, an agriculture seed, a solid food article, or a water soluble solid core.

7. A coated substrate comprising:
a substrate;
a coating layer encapsulating the substrate, the coating layer comprising a primary portion covering a substantial surface area of the substrate; and a sealing area covering a reminder of the surface area of the substrate, the primary portion comprising a single unitary piece of polymer film having edges sealed at the sealing area.

8. The coated substrate of claim 7, wherein the substrate is a fertilizer, a pesticide, a fertilizer-pesticide combination product, a pharmaceutical tablet, a nutraceutical tablet, an agriculture seed, a solid food article, or a water soluble solid core.

9. The coated substrate of claim 7 or claim 8, wherein the sealing area comprises excess film of the single piece of polymer film laminated to at least one of the substrate or polymer film forming the coating layer.

10. The coated substrate of any one of claims 7 to 9, wherein the coating layer comprises at least one of a polymer, a polymer processing additive, a mineral, a pigment, a pesticide, a antimicrobial agent, a anti ripening agent, a plant growth agent, a micro-nutrient, a pharmaceutically active ingredient, a poly(vinyl alcohol), a wax, a tackifying resin, a tackifier, fungicide, insecticide, nematicide, herbicide, microorganism and/or a fertilizer .

11. The coated substrate of any one of claims 7 to 10, wherein the coating layer is at least one of a thermoformable film, vacuum formable film, biodegradable film, non-biodegradable film, water-soluble film, and/or non-enteric film.

12. A system for manufacturing a coated substrate, the system comprising:
a feed device configured to feed a substrate into a receptacle, the receptacle having a counterpart pedestal ;
a first coating apparatus configured to apply a coating layer to the receptacle; and
a biasing device configured to bias the coating layer around the substrate and a portion of the pedestal;
the pedestal being movable relative to its counterpart receptacle through an opening defined in the counterpart receptacle, the pedestal configured to transition between an extended position in which the pedestal is extended into its counterpart receptacle for receiving the substrate on the pedestal and a withdrawn position in which the pedestal is withdrawn from its counterpart receptacle disengaging the pedestal from the substrate and coating layer to form a coated substrate having a tail; and
a sealing system to seal the tail to the coating layer.

13. The system of claim 12 comprising a second coating apparatus configured to apply a second coating layer onto each pedestal to partially coat the pedestal before the pedestal receives the substrate.

14. The system of claim 12 or claim 13, wherein each pedestal is configured to translate along its longitudinal axis through the opening the counterpart receptacle without horizontal displacement to engage the substrate or disengage from the substrate.

15. The system of any one of claims 12 to 14, wherein the biasing device is a vacuum pump configured to create vacuum pressure at the opening to bias the coating layer around the substrate and the portion of the pedestal.

## Patentansprüche

1. Verfahren zur Herstellung eines beschichteten Substrats, wobei das Verfahren umfasst:
Befestigen eines Substrats an einem Sockel;
Aufbringen einer ersten Beschichtungsschicht auf das Substrat;
Umwickeln des Substrats mit der ersten Beschichtungsschicht, um das Substrat im Wesentlichen zu beschichten, wobei die erste Beschichtungsschicht eine überschüssige Beschichtung der ersten Beschichtungsschicht aufweist, die sich vom im Wesentlichen beschichteten Substrat weg und um den Sockel herum erstreckt;
Entfernen des Sockels vom Substrat;
Bilden eines Endstücks aus der überschüssigen Beschichtung der ersten Beschichtungsschicht, wobei sich das Endstück in einem Winkel von der Oberfläche des Substrats erstreckt; und
Versiegeln des Endstücks mit der ersten Beschichtungsschicht, um das Substrat zu umschließen.

2. Verfahren nach Anspruch 1, das ferner umfasst:
vor dem Befestigen des Substrats an dem Sockel, Aufbringen einer zweiten Beschichtungsschicht auf den Sockel, um den Sockel teilweise zu beschichten; und
Aufbringen des Substrats auf den teilweise beschichteten Sockel.

3. Verfahren nach Anspruch 2, umfassend das Erhitzen der zweiten Beschichtungsschicht, um die zweite Beschichtungsschicht um den Sockel herum thermisch zu formen.

4. Verfahren nach Anspruch 2 oder 3, wobei das Endstück aus der überschüssigen Beschichtung der ersten Beschichtungsschicht und einem Teil der zweiten Beschichtungsschicht gebildet wird.

5. Verfahren nach einem der Ansprüche 1 bis 4, ferner umfassend das Schmelzen des Endstücks und das Laminieren des geschmolzenen Endstücks auf die erste Beschichtungsschicht.

6. Verfahren nach einem der Ansprüche 1 bis 5, wobei das Substrat ein Düngemittel, ein Pestizid, ein Kombinationsprodukt aus Düngemittel und Pestizid, eine pharmazeutische Tablette, eine nutrazeutische Tablette, ein landwirtschaftliches Saatgut, ein fester Nahrungsartikel oder ein wasserlöslicher fester Kern ist.

7. Beschichtetes Substrat, aufweisend:
ein Substrat;
eine das Substrat umschließende Beschichtungsschicht, wobei die Beschichtungsschicht einen Hauptteil aufweist, der einen wesentlichen Teil der Oberfläche des Substrats bedeckt; und einen Versiegelungsbereich, der den Rest der Oberfläche des Substrats bedeckt, wobei der Hauptteil ein einzelnes, einstückiges Polymerfolienstück aufweist, dessen Ränder im Versiegelungsbereich versiegelt sind.

8. Beschichtetes Substrat nach Anspruch 7, wobei das Substrat ein Düngemittel, ein Pestizid, ein Kombinationsprodukt aus Düngemittel und Pestizid, eine pharmazeutische Tablette, eine nutrazeutische Tablette, ein landwirtschaftliches Saatgut, ein fester Nahrungsartikel oder ein wasserlöslicher fester Kern ist.

9. Beschichtetes Substrat nach Anspruch 7 oder Anspruch 8, wobei der Versiegelungsbereich eine überschüssige Folie der einzelnen Polymerfolie aufweist, die auf mindestens eines der Substrate oder den Polymerfolie laminiert ist, die die Beschichtungsschicht bilden.

10. Beschichtetes Substrat nach einem der Ansprüche 7 bis 9, wobei die Beschichtungsschicht mindestens eines der folgenden Elemente aufweist: ein Polymer, einen Polymerverarbeitungszusatz, ein Mineral, ein Pigment, ein Pestizid, ein antimikrobielles Mittel, ein Reifungsverzögerungsmittel, ein Pflanzenwachstumsmittel, einen Mikronährstoff, einen pharmazeutisch wirksamen Bestandteil, einen Poly(vinylalkohol), ein Wachs, ein klebrigmachendes Harz, ein Klebrigmacher, ein Fungizid, ein Insektizid, ein Nematizid, ein Herbizid, einen Mikroorganismus und/oder einen Dünger.

11. Beschichtetes Substrat nach einem der Ansprüche 7 bis 10, wobei die Beschichtungsschicht mindestens eine thermoformbare Folie, eine vakuumformbare Folie, eine biologisch abbaubare Folie, eine nicht biologisch abbaubare Folie, eine wasserlösliche Folie und/oder eine nicht magensaftresistente Folie ist.

12. System zur Herstellung eines beschichteten Substrats, wobei das System aufweist:
eine Zuführvorrichtung, die so konfiguriert ist, dass sie ein Substrat in eine Aufnahme einführt, wobei die Aufnahme einen Gegensockel aufweist;
eine erste Beschichtungsvorrichtung, die so konfiguriert ist, dass sie eine Beschichtungsschicht auf die Aufnahme aufträgt; und
eine Vorspannvorrichtung, die so konfiguriert ist, dass sie die Beschichtungsschicht um das Substrat und einen Teil des Sockels vorspannt;
wobei der Sockel relativ zu seiner Gegen-Aufnahme durch eine in der Gegenstückaufnahme definierte Öffnung beweglich ist, und so konfiguriert ist, dass er zwischen einer ausgefahrenen Position, in der er in seine Gegen-Aufnahme hineinragt, um das Substrat aufzunehmen, und einer zurückgezogenen Position, in der er aus seiner Gegen-Aufnahme zurückgezogen ist und sich vom Substrat und der Beschichtungsschicht löst, um ein beschichtetes Substrat mit einem Endstück zu bilden, umschalten kann; und
ein Versiegelungssystem zum Versiegeln des Endstücks an der Beschichtungsschicht.

13. System nach Anspruch 12, aufweisend eine zweite Beschichtungsvorrichtung, die so konfiguriert ist, dass sie eine zweite Beschichtungsschicht auf jeden Sockel aufträgt, um den Sockel teilweise zu beschichten, bevor der Sockel das Substrat aufnimmt.

14. System nach Anspruch 12 oder Anspruch 13, wobei jeder Sockel so konfiguriert ist, dass er sich entlang seiner Längsachse durch die Öffnung der Gegen- Aufnahme, ohne horizontale Verschiebung verschiebt, um das Substrat aufzunehmen oder sich von dem Substrat zu lösen.

15. System nach einem der Ansprüche 12 bis 14, wobei die Vorspannvorrichtung eine Vakuumpumpe ist, die so konfiguriert ist, dass sie an der Öffnung einen Unterdruck erzeugt, um die Beschichtungsschicht um das Substrat und den Teil des Sockels herum vorzuspannen.

## Revendications

1. Un procédé de fabrication d'un substrat revêtu, le procédé comprenant :
le fait de fixer un substrat à un socle ;
le fait d'appliquer une première couche de revêtement sur le substrat ;
le fait d'enrouler la première couche de revêtement autour du substrat pour sensiblement recouvrir le substrat, la première couche de revêtement présentant un excès de revêtement de la première couche de revêtement, s'étendant à partir du substrat sensiblement recouvert et autour du socle ;
le fait de retirer le socle du substrat ;
le fait de former une queue à partir de l'excédent de revêtement de la première couche de revêtement, la queue s'étendant selon un angle à partir de la surface du substrat ; et
le fait de sceller la queue à la première couche de revêtement afin d'encapsuler le substrat.

2. Le procédé selon la revendication 1, comprenant en outre :
avant de fixer le substrat au socle, le fait d'appliquer une deuxième couche de revêtement sur le socle afin de recouvrir partiellement le socle ; et
le fait de délivrer le substrat au socle partiellement recouvert.

3. Le procédé selon la revendication 2, comprenant le fait de chauffer la deuxième couche de revêtement pour thermoformer la deuxième couche de revêtement autour du socle.

4. Le procédé selon la revendication 2 ou la revendication 3, dans lequel la queue est formée à partir de l'excès de revêtement de la première couche de revêtement et d'une partie de la deuxième couche de revêtement.

5. Le procédé selon l'une quelconque des revendications 1 à 4, comprenant en outre le fait de faire fondre la queue et de laminer la queue fondue sur la première couche de revêtement.

6. Le procédé selon l'une quelconque des revendications 1 à 5, dans lequel le substrat est un engrais, un pesticide, un produit combiné engrais-pesticide, un comprimé pharmaceutique, un comprimé nutraceutique, une semence agricole, un produit alimentaire solide ou un noyau solide soluble dans l'eau.

7. Un substrat revêtu comprenant :
un substrat ;
une couche de revêtement encapsulant le substrat, la couche de revêtement comprenant une partie principale recouvrant une surface substantielle du substrat ; et une zone de scellement recouvrant le reste de la surface du substrat, la partie principale comprenant une seule pièce unitaire de film polymère ayant des bords qui sont scellés au niveau de la zone de scellement.

8. Le substrat revêtu selon la revendication 7, dans lequel le substrat est un engrais, un pesticide, un produit combiné engrais-pesticide, un comprimé pharmaceutique, un comprimé nutraceutique, une semence agricole, un produit alimentaire solide ou un noyau solide hydrosoluble.

9. Le substrat revêtu selon la revendication 7 ou la revendication 8, dans lequel la zone de scellement comprend un excès de film de la pièce unique de film polymère laminée sur au moins l'un parmi le substrat ou le film polymère formant la couche de revêtement.

10. Le substrat revêtu selon l'une quelconque des revendications 7 à 9, dans lequel la couche de revêtement comprend au moins un parmi un polymère, un additif de traitement de polymère, un minéral, un pigment, un pesticide, un agent antimicrobien, un agent anti-maturation, un agent de croissance des plantes, un micronutriment, un ingrédient pharmaceutiquement actif, un poly(alcool vinylique), une cire, une résine tackifiante, un agent tackifiant, un fongicide, un insecticide, un nématicide, un herbicide, un micro-organisme et/ou un engrais.

11. Le substrat revêtu selon l'une quelconque des revendications 7 à 10, dans lequel la couche de revêtement est au moins l'un parmi un film thermoformable, un film formable sous vide, un film biodégradable, un film non-biodégradable, un film hydrosoluble et/ou un film non entérique.

12. Un système pour fabriquer un substrat revêtu, le système comprenant :
un dispositif d'alimentation, configuré pour alimenter un substrat dans un réceptacle, le réceptacle ayant un socle correspondant ;
un premier appareil de revêtement, configuré pour appliquer une couche de revêtement sur le réceptacle ; et
un dispositif de sollicitation, configuré pour solliciter la couche de revêtement autour du substrat et d'une partie du socle ;
le socle étant mobile par rapport à son réceptacle correspondant à travers une ouverture définie dans le réceptacle correspondant, le socle étant configuré pour se déplacer entre une position d'extension, dans laquelle le socle s'étend dans son réceptacle correspondant afin de recevoir le substrat sur le socle, et une position de rétractation, dans laquelle le socle est retiré de son réceptacle correspondant, désengageant le socle par rapport au substrat et appliquant une couche de revêtement pour former un substrat revêtu ayant une queue ; et
un système de scellement, pour sceller la queue à la couche de revêtement.

13. Le système selon la revendication 12, comprenant un deuxième appareil de revêtement configuré pour appliquer une deuxième couche de revêtement sur chaque socle afin de recouvrir partiellement le socle avant que celui-ci ne reçoive le substrat.

14. Le système selon la revendication 12 ou la revendication 13, dans lequel chaque socle est configuré pour se déplacer le long de son axe longitudinal à travers l'ouverture du réceptacle correspondant sans déplacement horizontal pour venir en engagement avec le substrat ou en désengagement d'avec le substrat.

15. Le système selon l'une quelconque des revendications 12 à 14, dans lequel le dispositif de sollicitation est une pompe à vide configurée pour créer une pression de vide au niveau de l'ouverture afin de solliciter la couche de revêtement autour du substrat et de la partie du socle.
